(19) Europäisches Patentamt
European Patent Office
Office européen des brevets

(11) EP 4 410 853 B1

(12) EUROPEAN PATENT SPECIFICATION

(45) Date of publication and mention of the grant of the patent:
**05.11.2025 Bulletin 2025/45**

(21) Application number: **22876014.6**

(22) Date of filing: **22.09.2022**

(51) International Patent Classification (IPC):
***C08F 290/06*** (2006.01) ***C08G 18/32*** (2006.01)
***C08G 18/42*** (2006.01) ***C08G 18/44*** (2006.01)
***C08G 18/48*** (2006.01) ***C08G 18/67*** (2006.01)
***C08G 18/73*** (2006.01) ***C08G 18/75*** (2006.01)
***C08G 18/79*** (2006.01) ***C08J 7/046*** (2020.01)
***C08G 18/68*** (2006.01) ***C08G 18/78*** (2006.01)
***C08G 18/24*** (2006.01) ***C09D 175/16*** (2006.01)

(52) Cooperative Patent Classification (CPC):
(C-Sets available)
**C08J 7/046; C08F 290/067; C08G 18/246; C08G 18/3206; C08G 18/4277; C08G 18/44; C08G 18/4854; C08G 18/672; C08G 18/6725; C08G 18/673; C08G 18/68; C08G 18/73; C08G 18/755; C08G 18/758; C08G 18/7837;**
(Cont.)

(86) International application number:
**PCT/JP2022/035295**

(87) International publication number:
**WO 2023/054147 (06.04.2023 Gazette 2023/14)**

(54) **ACTIVE-ENERGY-RAY-CURABLE COATING COMPOSITION AND MOLDED ARTICLE**

DURCH AKTIVENERGIESTRAHLUNG HÄRTBARE BESCHICHTUNGSZUSAMMENSETZUNG UND FORMARTIKEL

COMPOSITION DE REVÊTEMENT DURCISSABLE PAR RAYONNEMENT D’ÉNERGIE ACTIVE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2021 JP 2021157737**

(43) Date of publication of application:
**07.08.2024 Bulletin 2024/32**

(73) Proprietor: **DIC CORPORATION**
**Itabashi-ku**
**Tokyo 174-8520 (JP)**

(72) Inventors:
- **OKA, Kenichirou**
**Ichihara-shi, Chiba 290-8585 (JP)**
- **FUTAGAWA, Hiroki**
**Ichihara-shi, Chiba 290-8585 (JP)**
- **TAKADA, Yasuhiro**
**Ichihara-shi, Chiba 290-8585 (JP)**

(74) Representative: **TBK**
**Bavariaring 4-6**
**80336 München (DE)**

(56) References cited:
**EP-A1- 2 011 837**
**WO-A1-2013/157624**
**JP-A- 2007 314 769**
**JP-A- 2010 215 843**
**JP-A- 2017 002 142**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 410 853 B1

(52) Cooperative Patent Classification (CPC): (Cont.)
**C08G 18/792; C09D 175/16**

C-Sets
**C08F 290/067, C08F 222/1006;**
**C08G 18/672, C08G 18/42;**
**C08G 18/672, C08G 18/44;**
**C08G 18/672, C08G 18/48;**
**C09D 175/16, C08K 5/005**

## Description

### Technical Field

The present invention relates to an active-energy-ray-curable coating composition and a molded article. The invention is set out in the appended set of claims.

### Background Art

Resin materials, particularly a transparent resin material typified by a polycarbonate, have features such as low specific gravity, light weight, easy processability, and higher impact resistance than that of inorganic glass. In recent years, the resin materials have been widely used in many applications by using the features.

On the other hand, the resin materials have low abrasion resistance, and therefore have defects such as easy breakage of a surface leading to deterioration of luster and transparency, and easy erosion by an organic solvent, low weather resistance (for example, low stability to light such as ultraviolet light), and low heat resistance. Therefore, the resin materials are often coated with a various types of protective films for use to improve surface characteristics.

Such a protective film includes, for example, a hardcoat film obtained by curing an active-energy-ray-curable coating composition.

As an active-energy-ray-curable coating composition having both abrasion resistance and weather resistance, a composition in which a urethane (meth)acrylate having an isocyanurate ring and a poly[(meth)acryloyloxyalkyl] isocyanurate compound are combined at a specific ratio is known (for example, see PTL 1).

PTL 2 discloses as an active-energy-ray-curable coating composition that is excellent in adherence to a substrate and has excellent abrasion resistance and weather resistance a composition in which a urethane (meth) acrylate synthesized from a polycarbonate polyol compound having a branched alkyl structure and a number average molecular weight of 500 to 1,000, a diisocyanate compound having an alicyclic structure, and a mono(meth)acrylate compound having a hydroxyl group, poly[(meth)acryloyloxyalkyl] isocyanurate, and a mono- or poly-pentaerythritol poly(meth)acrylate modified with caprolactone are blended at a specific ratio.

PTL 3 discloses as a coating composition that has excellent weather resistance and can form a cured film having excellent abrasion resistance and substrate adherence a composition in which a poly(meth)acrylate of mono- or poly-pentaerythritol modified with caprolactone, a polyether-based urethane di(meth)acrylate compound having two (meth) acryloyloxy groups, and poly[(meth)acryloyloxyalkyl] isocyanurate are blended at a specific ratio.

### Citation List

#### Patent Literature

PTL 1: Japanese Unexamined Patent Application Publication No. 2010-254840
PTL 2: Japanese Unexamined Patent Application Publication No. 2012-229331
PTL 3: Japanese Unexamined Patent Application Publication No. 2007-314769

### Summary of Invention

#### Technical Problem

In recent years, for resin materials and active-energy-ray-curable coating compositions that can be used in a severe environment such as the outdoors, not only weather resistance and abrasion resistance, but also higher-level environment resistance is increasingly required. In particular, resistance to ultra-high temperature and high humidity is strongly required for the purpose of long-use in a severe high-humidity environment.

However, the inventions described in PTLs 1 to 3 do not investigate resistance to ultra-high temperature and resistance to humidity and heat of cured products of the compositions and cannot solve problems with resistance to ultra-high temperature and high humidity.

The present invention has been made in view of the circumstances, and provides an active-energy-ray-curable coating composition capable of forming a cured film that has abrasion resistance, high heat resistance, and resistance to humidity and heat, and is excellent in adherence even in a high temperature and high humidity environment, and a molded article having the cured film.

Solution to Problem

The inventors of the present invention have intensively studied, and as a result found that the problems can be achieved by an active-energy-ray-curable coating composition containing:

(A) a poly(meth)acrylate compound of pentaerythritol and/or a polyurethane (meth)acrylate compound of polypentaerythritol;
(B) a poly(meth)acrylate having an isocyanuric ring;
(C) a urethane di(meth)acrylate compound synthesized from an alicyclic isocyanate and/or a di(meth)acrylate compound having a specific alicyclic structure; and
(D) a urethane tri(meth)acrylate compound having an isocyanurate bond or an allophanate bond at a specific ratio.
Thus, the present invention has been completed.

Specifically, the present invention provides the following aspects of the invention.

(1) An active-energy-ray-curable coating composition containing components (A) to (D):

as the component (A), a compound represented by the following general formula (1) or (2); as the component (B), a compound represented by the following general formula (3); as the component (C), a compound represented by the following general formula (4), (5), or (6), and as the component (D). a compound represented by the following general formula (7) or (8), wherein
in the total solid content of the components (A) to (D), the content of the component (A) is 1% by mass or more and 40% by mass or less, the content of the component (B) is 30% by mass or more and 85% by mass or less, the content of the component (C) is 1% by mass or more and 30% by mass or less, and the content of the component (D) is 1% by mass or more and 40% by mass or less.

[Formula 1]

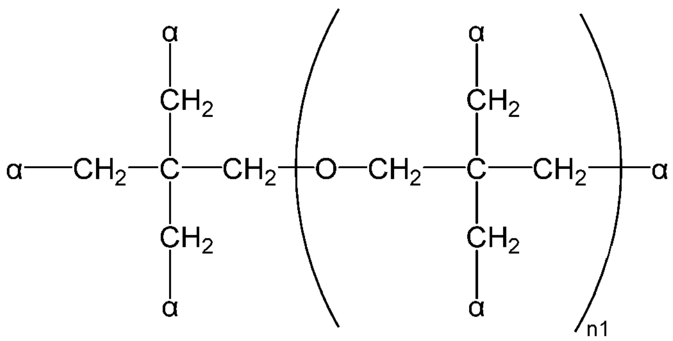

(1)

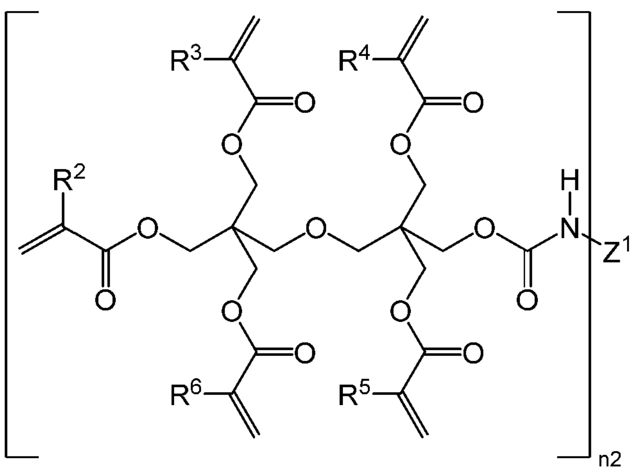

(2)

[Formula 2]

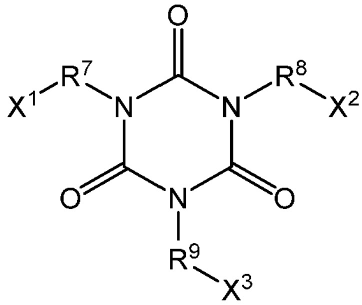

(3)

[Formula 3]

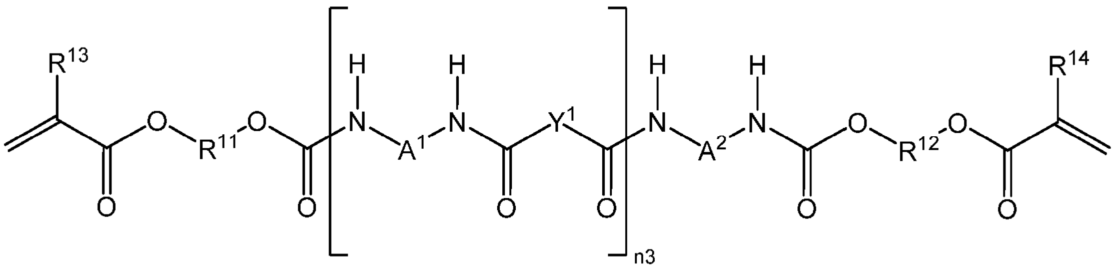

(4)

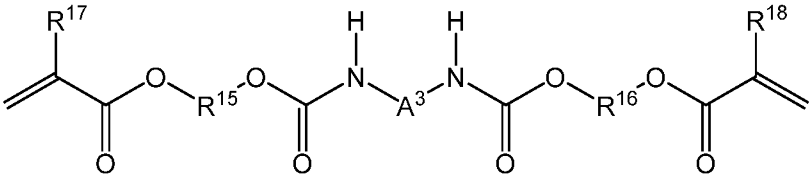

(5)

[Formula 4]

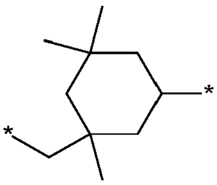

(*1)

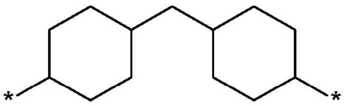

(*2)

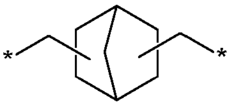

(*3)

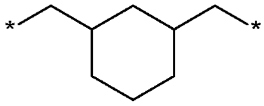

(*4)

[Formula 5]

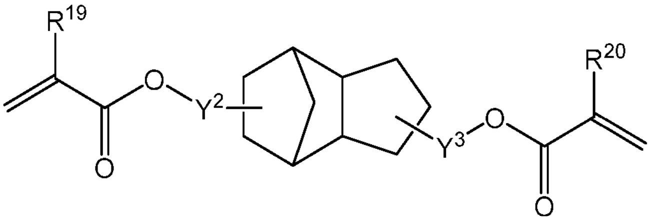

(6)

[Formula 6]

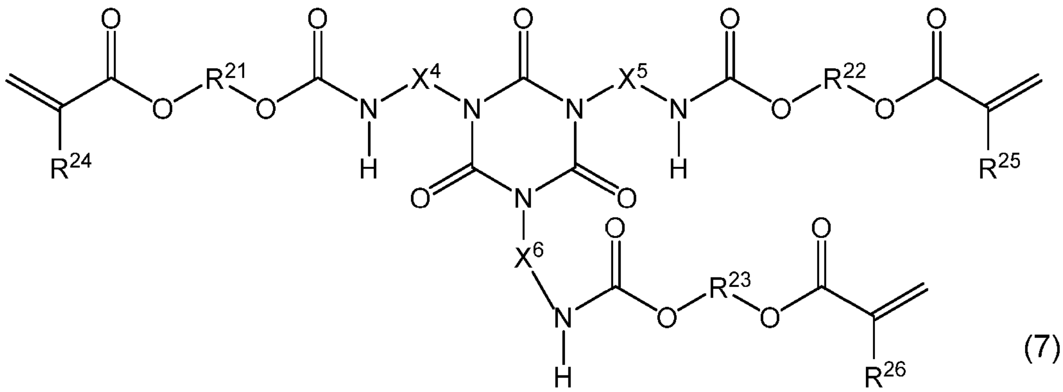

(7)

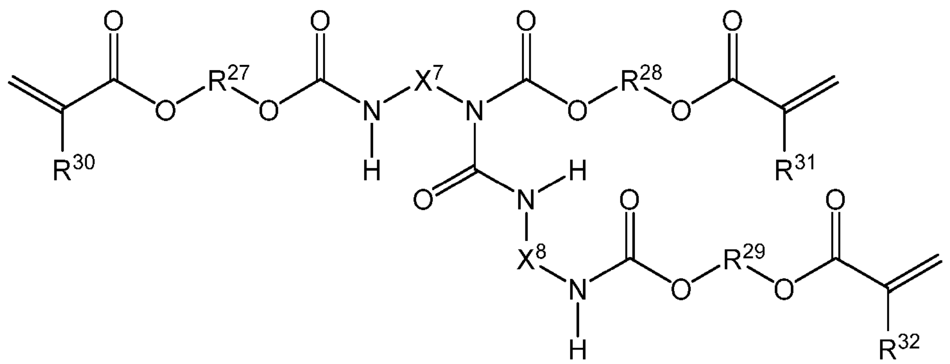

(8)

In the formula, at least three a's of a plurality of a's represent $CH_2=CR^1$-COO-, $R^1$ represents a hydrogen atom or a methyl group, the rest of a's represents a hydroxy group, and n1 represents an integer of 0 to 4. $Z^1$ represents a structure derived from an aliphatic isocyanate or an alicyclic isocyanate, $R^2$ to $R^6$ each independently represent a hydrogen atom or a methyl group, and n2 represents an integer of 2 to 3. When the compound has a plurality of $R^2$'s to $R^6$'s, $R^2$'s to $R^6$'s may be the same as or different from each other.

$X^1$, $X^2$, and $X^3$ each independently represent $CH_2=CR^{10}$-CO-, $CH_2=CR^{10}$-CO(O$(CH_2)_5$-C0$)_{a1}$-, a hydrogen atom, or an alkyl group, $R^{10}$'s represent a hydrogen atom or a methyl group and may be the same as or different from each other, and a1 is an integer of 1 or more. At least two of $X^1$ to $X^3$ are $CH_2=CR^{10}$-CO- or $CH_2=CR^{10}$-CO(O$(CH_2)_5$-CO$)_{a1}$-, and $R^7$, $R^8$, and $R^9$ each independently represent an oxyalkylene group or a polyoxyalkylene group.

$Y^1$ is a group formed by removal of two hydrogen atoms from a compound selected from the group consisting of a diol compound having a linear or branched alkylene group, a polycaprolactone diol, a polyether diol, and a polycarbonate diol, $R^{11}$, $R^{12}$, $R^{15}$, and $R^{16}$ are each independently a primary or secondary alkylene group having 1 to 10 carbon atoms or a group formed by removal of two hydroxy groups from a compound selected from the group consisting of caprolactone diol, a polyether diol, and a polycarbonate diol, $R^{13}$, $R^{14}$, $R^{17}$, and $R^{18}$ are each independently a hydrogen atom or a methyl group, and $A^1$, $A^2$, and $A^3$ are each independently any of the groups represented by the following formulae (*1) to (*4).

**[0017]** * is a bond, and is bound to a nitrogen atom in the formula (4) or (5).

$R^{19}$ and $R^{20}$ each independently represent a hydrogen atom or a methyl group, and $Y^2$ and $Y^3$ each independently represent an alkylene group having 1 to 5 carbon atoms.

$R^{21}$ to $R^{23}$ and $R^{27}$ to $R^{29}$ each independently represent a linear or branched alkylene group having 1 to 10 carbon atoms, $R^{24}$ to $R^{26}$ and $R^{30}$ to $R^{32}$ each independently represent a hydrogen atom or a methyl group, and $X^4$ to $X^6$, $X^7$, and $X^8$ each independently represent an alkylene group having 2 to 17 carbon atoms.

(2) The active-energy-ray-curable coating composition according to (1), wherein the component (C) is a compound represented by the following general formula (9) or (10):

[Formula 7]

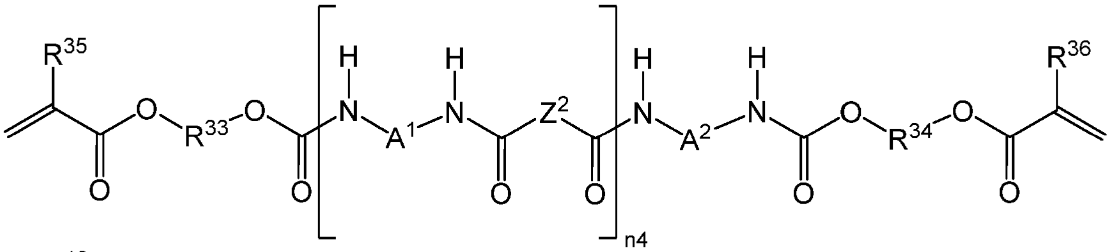

(9)

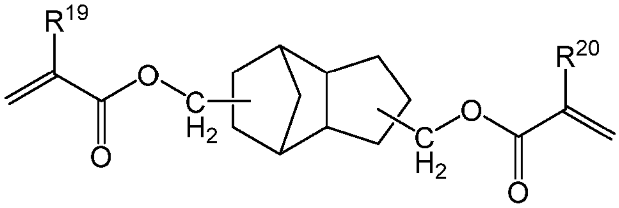

(10)

wherein $Z^2$ is a group formed by removal of two hydrogen atoms from a compound selected from the group consisting of a polytetramethylene glycol and a polycarbonate diol, $R^{33}$ and $R^{34}$ are a primary or secondary alkylene group having 1 to 10 carbon atoms, n4 is an integer of 1 to 10, $R^{35}$, $R^{36}$, $R^{19}$, and $R^{20}$ are a hydrogen atom or a methyl group, and $A^1$ and $A^{28}$ are the same as described above.

(3) The active-energy-ray-curable coating composition according to (1) or (2), wherein the component (A) is the compound represented by the general formula (2).

(4) A molded article including a cured film of the active-energy-ray-curable coating composition according to any one of (1) to (3), and a substrate.

(5) The molded article according to (4), wherein the substrate is a polycarbonate resin.

Advantageous Effects of Invention

The active-energy-ray-curable coating composition of the present invention can form a cured film having abrasion resistance, high heat resistance, and high resistance to humidity and heat. The cured film is excellent in adherence to a resin material such as a polycarbonate and has excellent adherence even in a high temperature and high humidity environment, and therefore the active-energy-ray-curable coating composition of the present invention can be suitably used as a hardcoat for the resin material in automotive applications and building material applications.

Description of Embodiments

<Active-Energy-Ray-Curable Coating Composition>

An active-energy-ray-curable coating composition of the present invention (hereinafter sometimes simply referred to as "coating composition" or "composition") contains components (A) to (D).

In the description, a compound represented by a formula (1) is referred to as "compound (1)", and compounds represented by other formulae are referred in the same way. "Acrylate" and "methacrylate" are collectively referred to as "(meth)acrylate". "Acrylic acid" and "methacrylic acid", "acryloyl group" and "methacryloyl group", and "acryloyloxy group" and "methacryloyloxy group" are described using the term "(meth)" similarly as a concept including both of them.

[Component (A)]

The component (A) is a compound represented by a formula (1) or (2).

(Compound (1))

The compound (1) is a poly(meth)acrylate of pentaerythritol represented by the following formula (1).

[Formula 8]

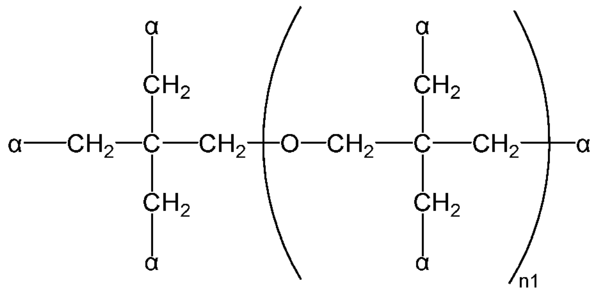

(1)

In the formula (1), at least three a's of a plurality of a's represent $CH_2=CR^1-COO-$, and the rest of a's represents a hydroxy group.

$R^1$ represents a hydrogen atom or a methyl group. When $R^1$ is a hydrogen atom, a polymerizable unsaturated group is an acryloyl group, and when $R^1$ is a methyl group, the polymerizable unsaturated group is a methacryloyl group.

That is, the compound (1) is a polymerizable compound having a pentaerythritol skeleton and three or more (meth)acryloyloxy groups as polymerizable unsaturated groups in a structure thereof. When the compound has three or more polymerizable unsaturated groups, the cross-linking density during curing can be increased to improve abrasion resistance.

n1 represents an integer of 0 to 4, preferably an integer of 0 to 2, and more preferably 0 or 1. It is particularly preferable that n1 be 1 and the compound (1) have a dipentaerythritol skeleton. When n1 in the compound (1) is 1, five or six a's of six a's in the structure are preferably polymerizable unsaturated groups, and all six a's are preferably polymerizable unsaturated groups.

Examples of a specific structure of the compound (1) include pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, and dipentaerythritol hexa(meth)acrylate.

Among these, pentaerythritol tri(meth)acrylate, pentaerythritol tetra(meth)acrylate, dipentaerythritol penta(meth)acrylate, and dipentaerythritol hexa(meth)acrylate are preferred, dipentaerythritol penta(meth)acrylate and dipentaerythritol hexa(meth)acrylate are more preferred, and dipentaerythritol hexa(meth)acrylate is particularly preferred.

One type of the compound (1) may be used alone, or two or more types thereof may be used in combination.

(Compound (2))

The compound (2) is a urethane (meth)acrylate compound that is represented by the following formula (2) and has two or three dipentaerythritol skeletons. The compound (2) is synthesized from a poly(meth)acrylate of a polypentaerythritol, and an aliphatic or alicyclic diisocyanate or triisocyanate.

[Formula 9]

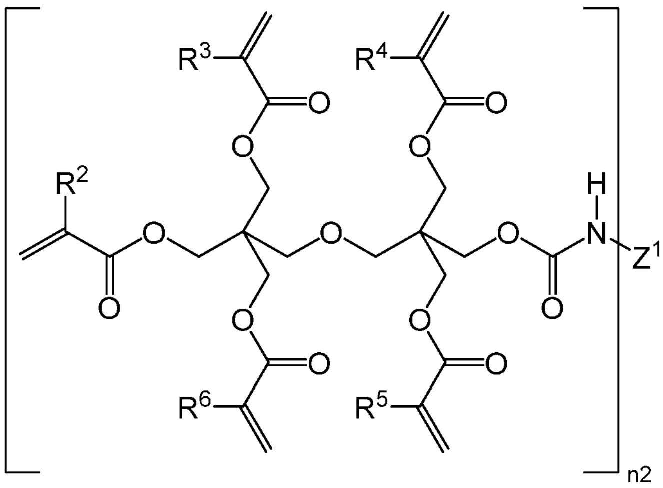

(2)

In the formula (2), n2 represents an integer of 2 to 3, and is preferably 2.

$Z^1$ represents a structure derived from an aliphatic isocyanate or an alicyclic isocyanate. That is, $Z^1$ is a moiety derived from the aliphatic or alicyclic diisocyanate or triisocyanate that is used in the synthesis of the compound (2).

Examples of the aliphatic isocyanate or the alicyclic isocyanate include aliphatic polyisocyanates such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate, and lysine triisocyanate, dimers thereof, and trimers thereof; alicyclic polyisocyanates such as norbornane diisocyanate, isophorone diisocyanate, methylene bis(4-cyclohexyl isocyanate), 1,3-bis(isocyanatomethyl) cyclohexane, hydrogenated xylylene diisocyanate, 2-methyl-1,3-diisocyanatocyclohexane, and 2-methyl-1,5-diisocyanatocyclohexane, dimers thereof, and trimers thereof.

The "structure derived from an aliphatic isocyanate or an alicyclic isocyanate" substantially indicates a moiety formed by removal of an isocyanate group from the aliphatic isocyanate or the alicyclic isocyanate. Examples of $Z^1$ include an alkyl group having 1 to 10 carbon atoms, 4,4'-methylenebiscyclohexyl, methyl-3,5,5-trimethylcyclohexyl, and cyclohexyl.

Among these, 1,6-hexamethylene diisocyanate that is a diisocyanate of a linear aliphatic hydrocarbon, and norbornane diisocyanate, isophorone diisocyanate, hydrogenated xylylene diisocyanate, and methylene bis(4-cyclohexyl isocyanate) that are an alicyclic diisocyanate are preferred. Hexamethylene diisocyanate and methylene bis(4-cyclohexyl isocyanate) are more preferred. When by synthesis of the compound (2) from these isocyanates, a portion of a structure thereof is incorporated into $Z^1$, the abrasion resistance of a cured film can be improved.

$R^2$ to $R^6$ each independently represent a hydrogen atom or a methyl group, and preferably a hydrogen atom.

When the compound has a plurality of $R^2$'s to $R^6$'s, $R^2$'s to $R^6$'s may be the same as or different from each other.

Examples of a specific structure of the compound (2) include reaction products of aliphatic polyisocyanates such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate, and lysine triisocyanate, dimers thereof, or trimers thereof, or alicyclic polyisocyanates such as norbornane diisocyanate, isophorone diisocyanate, methylene bis(4-cyclohexyl isocyanate), 1,3-bis(isocyanatomethyl) cyclohexane, hydrogenated xylylene diisocyanate, 2-methyl-1,3-diisocyanatocyclohexane, and 2-methyl-1,5-diisocyanatocyclohexane, dimers thereof, or trimers thereof, with dipentaerythritol penta(meth)acrylate.

One type of the compound (2) may be used alone, or two or more types thereof may be used in combination.

The component (A) may contain the compound (1) alone, the compound (2) alone, or both the compounds (1) and (2). The component (A) preferably contains both the compounds (1) and (2). Use of at least the compound (2) is preferred since the compound (2) is more excellent in weather resistance and abrasion resistance.

The content of the component (A) is 1 to 40% by mass, preferably 3 to 35% by mass, more preferably 4 to 30% by mass, and particularly preferably 5 to 25% by mass, relative to 100% by mass of the total solid content of the components (A) to (D). When it is equal to or more than the lower limit value, abrasion resistance is improved. When it is equal to or less than the upper limit value, a decrease in adherence and a decrease in weather resistance in an ultra-high temperature and high humidity environment can be prevented.

Relative to 100% by mass of the whole solid content of the composition of the present invention, that is, relative to 100% by mass of the whole amount of the composition except a solvent such as an organic solvent, the content of the component (A) is not particularly limited, but is preferably 0.25 to 40% by mass, more preferably 1.25 to 35% by mass, and still more preferably 1.75 to 30% by mass.

[Component (B)]

The component (B) is a compound represented by the following formula (3).

(Compound (3))

[Formula 10]

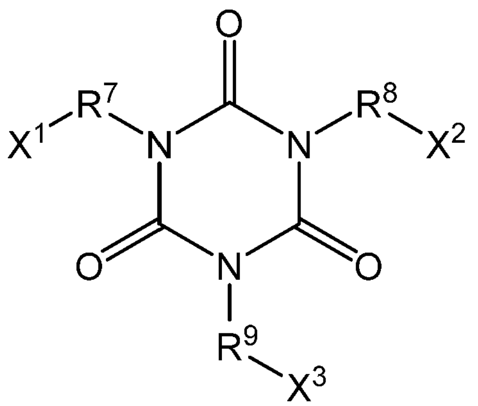

(3)

In the formula (3), $R^7$, $R^8$, and $R^9$ each independently represent an oxyalkylene group or a polyoxyalkylene group.

The number of carbon atoms in the oxyalkylene group is preferably 1 to 8, more preferably 1 to 5, and particularly preferably 1 to 3.

The number of carbon atoms in the polyoxyalkylene group and the number of carbon atoms per repeating unit are preferably 1 to 8, more preferably 1 to 5, and particularly preferably 1 to 3. The number of repetition of oxyalkylene group in the polyoxyalkylene group is preferably within the range of 1 to 10.

An oxygen atom in the oxyalkylene group and an oxygen atom at the end of the polyoxyalkylene group are bonded to $X^1$, $X^2$, or $X^3$ in the formula.

$X^1$, $X^2$, and $X^3$ each independently represent $CH_2=CR^{10}-CO-$, $CH_2=CR^{10}-CO(O(CH_2)_5-CO)_{a1}-$, a hydrogen atom, or an alkyl group, but at least two of $X^1$ to $X^3$ are $CH_2=CR^{10}-CO-$ or $CH_2=CR^{10}-CO(O(CH_2)_5-CO)_{a1}-$.

$R^{10}$'s represent a hydrogen atom or a methyl group and may be the same as or different from each other, but is preferably a hydrogen atom.

a1 is an integer of 1 or more, preferably an integer of 1 to 3, more preferably 1 or 2, and particularly preferably 1.

Among these, $X^1$, $X^2$, and $X^3$ are preferably $CH_2=CR^{10}-CO-$, $CH_2=CR^{10}-CO(O(CH_2)_5-CO)_{a1}-$, or a hydrogen atom, at least two of $X^1$ to $X^3$ are more preferably $CH_2=CR^{10}-CO-$, and all three of $X^1$ to $X^3$ are particularly preferably $CH_2=CR^{10}-CO-$.

Particularly preferable examples of the compound (3) include a compound represented by the following formula (3-1).

In the formula, $R^{10}$'s are the same as described above, and $R^{7'}$ to $R^{9'}$ are an alkylene group having 1 to 5 (preferably 1 to 3) carbon atoms.

[Formula 11]

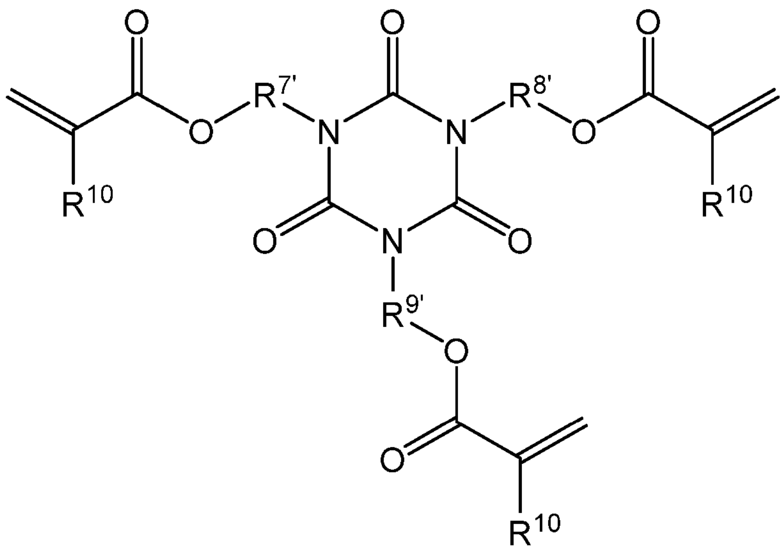

(3-1)

Specific examples of a structure of the component (B) include bis(2-acryloyloxyethyl)hydroxyethyl isocyanurate, tris(2-acryloyloxyethyl) isocyanurate, bis(2-acryloyloxypropyl)hydroxyethyl isocyanurate, tris(2-acryloyloxypropyl) isocyanurate, tris(2-acryloyloxyethyl) isocyanurate modified with caprolactone in an amount of one per molecule (product name: ARONIX M-325 manufactured by TOAGOSEI CO., LTD.), and tris(2-acryloyloxyethyl) isocyanurate modified with caprolactone in an amount of three per molecule (product name: ARONIX M-327 manufactured by TOAGOSEI CO., LTD.).

One type of the compound (B) may be used alone, or two or more types thereof may be used in combination.

The content of the component (B) is 30 to 85% by mass, preferably 35 to 80% by mass, and particularly preferably 40 to 75% by mass, relative to 100% by mass of the total solid content of the components (A) to (D). When it is equal to or more than the lower limit value, weather resistance, abrasion resistance, and resistance to high temperature and high humidity are improved.

Relative to 100% by mass of the whole solid content of the composition of the present invention, that is, relative to 100% by mass of the whole amount of the composition except a solvent such as an organic solvent, the content of the component (B) is not particularly limited, but is preferably 7.5 to 85% by mass, more preferably 12.5 to 80% by mass, and still more preferably 15 to 75% by mass.

[Component (C)]

The component (C) is a di(meth)acrylate compound that is represented by any one of formulae (4) to (6) and has a specific alicyclic structure.

(Compounds (4) and (5))

Compounds (4) and (5) are urethane (meth)acrylate that is synthesized from an alicyclic isocyanate compound represented by the following formula (4) or (5), respectively.

[Formula 12]

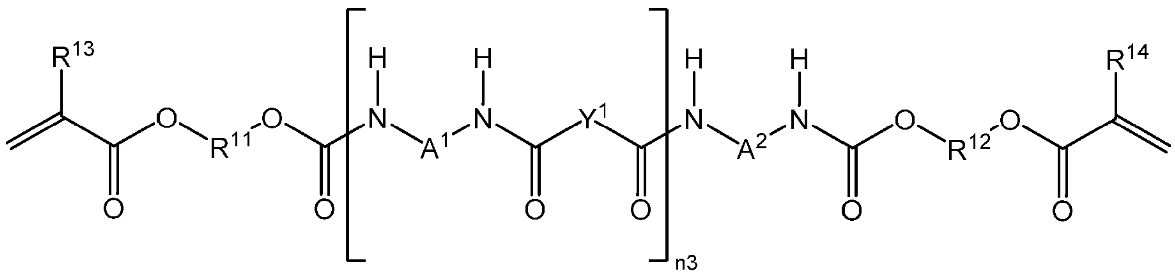

(4)

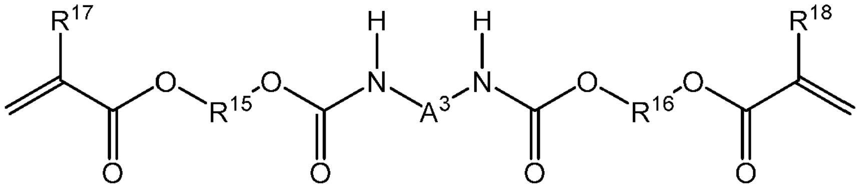

(5)

In the formula (4), $Y^1$ is a group formed by removal of two hydrogen atoms from a compound selected from the group consisting of a diol compound having a linear or branched alkylene group, a polycaprolactone diol, a polyether diol, and a polycarbonate diol.

Among these, $Y^1$ is preferably a group formed by removal of two hydrogen atoms from a compound selected from the group consisting of a polytetramethylene glycol and a polycarbonate diol.

Examples of the diol compound having a linear alkylene group in $Y^1$ include ethylene glycol, 1,3-propylene glycol, 1,4-butanediol, 1,5-pentanediol, 1,6-hexanediol, 1,8-octanediol, 1,9-nonanediol, and 1,10-decanediol.

Examples of the diol compound having a branched alkylene group in $Y^1$ include 3-methyl-1,5-pentanediol, neopentyl glycol, 2-ethyl-1,3-hexanediol, 2-methyl-1,8-octanediol, tricyclodecane dimethanol, and cyclohexane dimethanol.

Specific examples of the polyether diol in $Y^1$ include a polyethylene glycol (PEG), a polypropylene glycol (PPG), a polybutylene glycol (PBG), a polytetramethylene glycol (PTMG), block copolymers thereof, and random copolymers thereof. The mass average molecular weight thereof is preferably 2,000 or less, and more preferably 1,000 or less. In particular, a polytetramethylene glycol is desired.

Examples of the polycaprolactone diol in Y1 include "PLACCEL 205" that is a polycaprolactone diol having a mass average molecular weight of 530, "PLACCEL 205BA" that is a polycaprolactone diol having a carboxy group on a side chain and a mass average molecular weight of 530, "PLACCEL L205AL" that is a polycaprolactone diol that is a liquid at normal temperature and has a mass average molecular weight of 500, "PLACCEL 205H" that is a polycaprolactone diol having higher water resistance than that of PLACCEL 205 and a mass average molecular weight of 530, "PLACCEL 205U" that is a polycaprolactone diol having lower viscosity and acid value than those of PLACCEL 205 and a mass average molecular weight of 530, "PLACCEL 208" that is a polycaprolactone diol having a mass average molecular weight of 830, "PLACCEL L208AL" that is a polycaprolactone diol that is a liquid at normal temperature and has a mass average molecular weight of 830, "PLACCEL 210" that is a polycaprolactone diol having a mass average molecular weight of 1,000, "PLACCEL 210BA" that is a polycaprolactone diol having a carboxy group on a side chain and a mass average molecular weight of 1,000, "PLACCEL 210CP" that is a polycaprolactone diol having lower acid value and higher water resistance than those of PLACCEL 210 and a mass average molecular weight of 1,000, "PLACCEL 210N" that is a polycaprolactone diol having smaller molecular weight distribution than that of PLACCEL 210 and a mass average molecular weight of 1,000, "PLACCEL 212" that is a polycaprolactone diol having a mass average molecular weight of 1,250, "PLACCEL L212AL" that is a polycaprolactone diol that is a liquid at normal temperature and has a mass average molecular weight of 1,250, "PLACCEL 220" that is a polycaprolactone diol having a mass average molecular weight of 2,000, "PLACCEL 220BA" that is a polycaprolactone diol having a carboxy group on a side chain and a mass average molecular weight of 2,000, "PLACCEL 220CPB" that is a polycaprolactone diol having lower acid value and higher water resistance than those of PLACCEL 220 and a mass average molecular weight of 2,000, "PLACCEL 220N" that is a polycaprolactone diol having smaller molecular weight distribution than that of PLACCEL 220 and a mass average molecular weight of 2,000, "PLACCEL 220NP1" that is a polycaprolactone diol having lower crystallinity than that of PLACCEL 220 and a mass average molecular weight of 2,000, "PLACCEL L220AL" that is a polycaprolactone diol that is a liquid at normal temperature and has a mass average molecular weight of 2,000, "PLACCEL 230" that is a polycaprolactone diol having a mass average molecular weight of 3,000, "PLACCEL L230AL" that is a polycaprolactone diol that is a liquid at normal temperature and has a mass average molecular weight of 3,000, "PLACCEL 230CP" that is a polycaprolactone diol having lower acid value and higher water resistance than those of PLACCEL 230 and a mass average molecular weight of 3,000,

"PLACCEL 240" that is a polycaprolactone diol having a mass average molecular weight of 4,000, "PLACCEL 240CP" that is a polycaprolactone diol having lower acid value and higher water resistance than those of PLACCEL 240 and a mass average molecular weight of 4,000, "PLACCEL 220EB" that is a polycaprolactone diol having higher hydrolysis resistance than that of PLACCEL 220 and a mass average molecular weight of 2,000, and "PLACCEL 220EC" that is a polycaprolactone diol having more excellent elastic recovery property than that of PLACCEL 220EB and a mass average molecular weight of 2,000 (product names, all manufactured by Daicel Corporation).

Among these, from the viewpoint of the weather resistance and abrasion resistance of a resulting cured film, a polycaprolactone diol having a mass average molecular weight of 500 to 1,500 is preferred, and a polycaprolactone diol having a mass average molecular weight of 500 to 1,000 is more preferred.

The polycarbonate diol in $Y^1$ can be synthesized by a transesterification reaction between a polyhydric alcohol having a linear alkyl structure, a branched alkyl structure, a polyether diol structure, or a caprolactone diol structure, with a carbonic ester.

Specific examples of the polyhydric alcohol having a linear alkyl structure include ethylene glycol, 1,3-propylene glycol, 1,4-butanediol, 1,5-pentanediol, 1,6-hexanediol, 1,8-octanediol, 1,9-nonanediol, and 1,10-decanediol.

Specific examples of the polyhydric alcohol having a branched alkyl structure include 3-methyl-1,5-pentanediol, neopentyl glycol, 2-ethyl-1,3-hexanediol, and 2-methyl-1,8-octanediol.

Specific examples of the carbonic ester include ethylene carbonate, dimethyl carbonate, diethyl carbonate, di-n-propyl carbonate, diisopropyl carbonate, dibutyl carbonate, dicyclohexyl carbonate, and diphenyl carbonate.

As the polycarbonate diol compound in $Y^1$, a commercially available product can also be used. Specific examples thereof include UH-50 (manufactured by UBE Corporation), UH-100 (manufactured by UBE Corporation), UH-200 (manufactured by UBE Corporation), UH-300 (manufactured by UBE Corporation), PH-50 (manufactured by UBE Corporation), PH-100 (manufactured by UBE Corporation), PH-200 (manufactured by UBE Corporation), PH-300 (manufactured by UBE Corporation), UC-100 (manufactured by UBE Corporation), UM-90 (manufactured by UBE Corporation), UHC50-100 (manufactured by UBE Corporation), UP-50 (manufactured by UBE Corporation), UP-100 (manufactured by UBE Corporation), UP-200 (manufactured by UBE Corporation), BENEBiOL NL1010DB (manufactured by Mitsubishi Chemical Corporation), BENEBiOL NL2010DB (manufactured by Mitsubishi Chemical Corporation), BENEBiOL NL3010DB (manufactured by Mitsubishi Chemical Corporation), BENEBiOL NL1005B (manufactured by Mitsubishi Chemical Corporation), BENEBiOL NL2005B (manufactured by Mitsubishi Chemical Corporation), BENEBiOL NL1030B (manufactured by Mitsubishi Chemical Corporation), BENEBiOL HS0830B (manufactured by Mitsubishi Chemical Corporation), BENEBiOL HS0840B (manufactured by Mitsubishi Chemical Corporation), BENEBiOL HS0840B (manufactured by Mitsubishi Chemical Corporation), BENEBiOL HS0850H (manufactured by Mitsubishi Chemical Corporation), KURARAY POLYOL C-590 (manufactured by Kuraray Co., Ltd.), KURARAY POLYOL C-1090 (manufactured by Kuraray Co., Ltd.), and KURARAY POLYOL C-2090 (manufactured by Kuraray Co., Ltd.).

The number average molecular weight of the polycarbonate polyol compound is preferably within the range of 500 to 2,000. When the average molecular weight is 500 or more, the weather resistance of a cured film of the coating composition is improved. From the viewpoint of the weather resistance of the cured film of the coating composition, the polycarbonate polyol compound is preferably one synthesized from the polyhydric alcohol having a linear alkyl structure.

In the formulae (4) and (5), $R^{11}$, $R^{12}$, $R^{15}$, and $R^{16}$ are each independently a primary or secondary alkylene group having 1 to 10 carbon atoms or a group formed by removal of two hydroxy groups from a compound selected from the group consisting of a polycaprolactone diol, a polyether diol, and a polycarbonate diol. Examples of the polycaprolactone diol, the polyether diol, and the polycarbonate diol are the same as those in $Y^1$ described above.

Among these, $R^{11}$, $R^{12}$, $R^{15}$, and $R^{16}$ are preferably a primary or secondary alkylene group having 1 to 10 carbon atoms.

$R^{13}$, $R^{14}$, $R^{17}$, and $R^{18}$ are each independently a hydrogen atom or a methyl group, and preferably a hydrogen atom.

$A^1$, $A^2$, and $A^3$ are each independently any of groups represented by the following formulae (*1) to (*4), and preferably the group represented by the formula (1) or (2).

In the formulae, * is a bond, and is bound to a nitrogen atom in the formula (4) or (5).

[Formula 13]

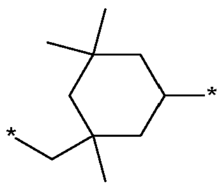

(*1)

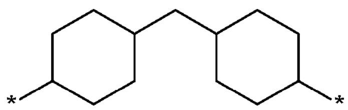

(*2)

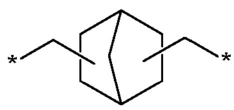

(*3)

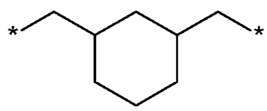

(*4)

Only any one of the compounds (4) and (5) may be used, or the compounds (4) and (5) may be used in combination. In the case of using any one of the compounds (4) and (5), the compound (4) is preferably used. This is because the compound (4) is more excellent in high temperature and high humidity adherence. Particularly preferable examples of the compound (4) include a compound represented by the following formula (9).

[Formula 14]

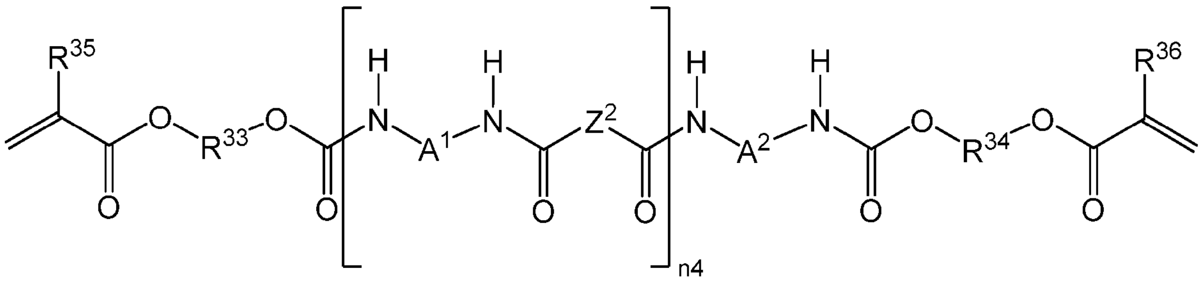

(9

In the formula (9), $Z^2$ is a group formed by removal of two hydrogen atoms from a compound selected from the group consisting of a polytetramethylene glycol and a polycarbonate diol, and is particularly preferably a polycarbonate diol having a number average molecular weight of 500 to 2,000 and a linear alkyl structure from the viewpoint of abrasion resistance and weather resistance.

$R^{33}$ and $R^{34}$ are a primary or secondary alkylene group having 1 to 10 carbon atoms, and preferably an alkylene group having 2 to 4 carbon atoms.

$R^{35}$ and $R^{36}$ are a hydrogen atom or a methyl group, and preferably a hydrogen atom.

$A^1$ and $A^2$ are the same as $A^1$ and $A^2$ in the formula (4).

Specific examples of the compound (4) include a compound obtained by a reaction between an aliphatic polyisocyanate such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate, or lysine triisocyanate, or an alicyclic polyisocyanate such as norbornane diisocyanate, isophorone diisocyanate, methylene bis(4-cyclohexyl isocyanate), 1,3-bis(isocyanatomethyl) cyclohexane, hydrogenated xylylene diisocyanate, 2-methyl-1,3-diisocyanatocyclohexane, or 2-methyl-1,5-diisocyanatocyclohexane; 2-hydroxyethyl (meth)acrylate, 2-hydroxypropyl (meth)acrylate, 3-hydroxypropyl (meth)acrylate, 4-hydroxybutyl (meth)acrylate, 2-hydroxybutyl (meth)acrylate, caprolactone-modified hydroxymono(meth)acrylate (FA-2D manufactured by Daicel Corporation), polycarbonate-modified hydroxymono(meth)acrylate (HEMAC manufactured by Daicel Corporation), or polyethylene glycol- or polypropylene glycol-modified hydroxymono(meth)acrylate (AE-200 and AP-400 manufactured by NOF Corporation); and the diol compound having a linear alkylene group, the diol compound having a branched alkylene group, the polyether polyol, the polycaprolactone diol, or the polycarbonate diol described above.

Specific examples of the compound (5) include a compound obtained by a reaction between an aliphatic polyisocyanate such as 1,4-butane diisocyanate, 1,5-pentane diisocyanate, 1,6-hexamethylene diisocyanate, 2,2,4-trimethylhexamethylene diisocyanate, 2,4,4-trimethylhexamethylene diisocyanate, lysine diisocyanate, or lysine triisocyanate, an alicyclic polyisocyanate such as norbornane diisocyanate, isophorone diisocyanate, methylene bis(4-cyclohexyl isocyanate), 1,3-bis(isocyanatomethyl) cyclohexane, hydrogenated xylylene diisocyanate, 2-methyl-1,3-diisocyanatocyclohexane, or 2-methyl-1,5-diisocyanatocyclohexane; and a (meth)acrylate having a hydroxy group such as 2-hydroxyethyl (meth)acrylate, 2-hydroxypropyl (meth)acrylate, 3-hydroxypropyl (meth)acrylate, 4-hydroxybutyl (meth)acrylate, 2-hydroxybutyl (meth)acrylate, caprolactone-modified hydroxymono(meth)acrylate (FA-2D manufactured by Daicel Corporation), polycarbonate-modified hydroxymono(meth)acrylate (HEMAC manufactured by Daicel Corporation), or polyethylene glycol- or polypropylene glycol-modified hydroxymono(meth)acrylate (AE-200 and AP-400 manufactured by NOF Corporation).

(Compound (6))

The compound (6) is a di(meth)acrylate having a tricyclodecane that is represented by the following formula (6).

[Formula 15]

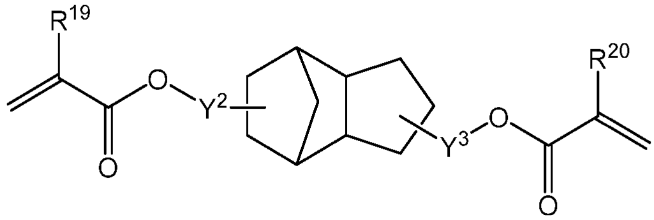
(6)

In the formula (6), $R^{19}$ and $R^{20}$ each independently represent a hydrogen atom or a methyl group, and preferably a hydrogen atom.
$Y^2$ and $Y^3$ each independently represent an alkylene group having 1 to 5 carbon atoms, preferably an alkylene group having 1 to 3 carbon atoms, more preferably a methylene group or an ethylene group, and particularly preferably a methylene group.
One type of the compound (6) may be used alone, or two or more types thereof may be used in combination.

[Formula 16]

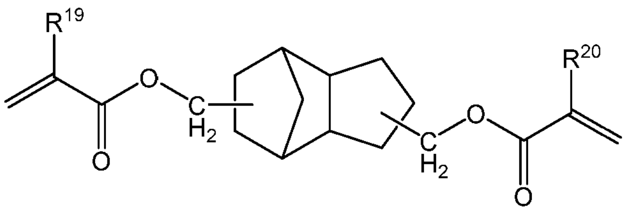
(10)

In the formula (10), $R^{19}$ and $R^{20}$ are the same as described above.
One type of the compound (10) may be used alone, or two or more types thereof may be used in combination.
Specific examples of commercially available products of the compounds (6) and (10) include EBECRYL130 (manufactured by DAICEL-ALLNEX LTD.), IRR214-K (manufactured by DAICEL-ALLNEX LTD.), A-DCP (manufactured by Shin Nakamura Chemical Co., Ltd.), DCP (manufactured by Shin Nakamura Chemical Co., Ltd.), KYARAD R684 (manufactured by Nippon Kayaku Co., Ltd.), MIRAMER M262 (manufactured by Miwon Specialty Chemical Co., Ltd.), and SR833NS (manufactured by Arkema).
The component (C) may include only any one of the compounds (4) to (6), (9), and (10), any two thereof, or all the compounds (4), (5), and (6).
In the case of using only any one of the compound (4) to (6), the compound (4), (6), (9), or (10) is preferably used. The compound (9) or (10) is particularly preferably used.
The content of the component (C) is 1 to 30% by mass, preferably 2 to 25% by mass, and particularly preferably 2.5 to 20% by mass, relative to 100% by mass of the composition of the present invention. When it is equal to or more than the lower limit value, adherence and weather resistance in an ultra-high temperature and high humidity environment are improved. When it is equal to or less than the upper limit value, a decrease in abrasion resistance can be prevented.
Relative to 100% by mass of the whole solid content of the composition of the present invention, that is, relative to 100% by mass of the whole amount of the composition except a solvent such as an organic solvent, the content of the component (C) is not particularly limited, but is preferably 0.25 to 30% by mass, more preferably 0.625 to 25% by mass, and still more preferably 1 to 20% by mass.

[Component (D)]

(Compounds (7) and (8))

The compound (D) is a urethane tri(meth)acrylate compound that is represented by the formula (7) or (8) and has an isocyanurate bond or an allophanate bond.

[Formula 17]

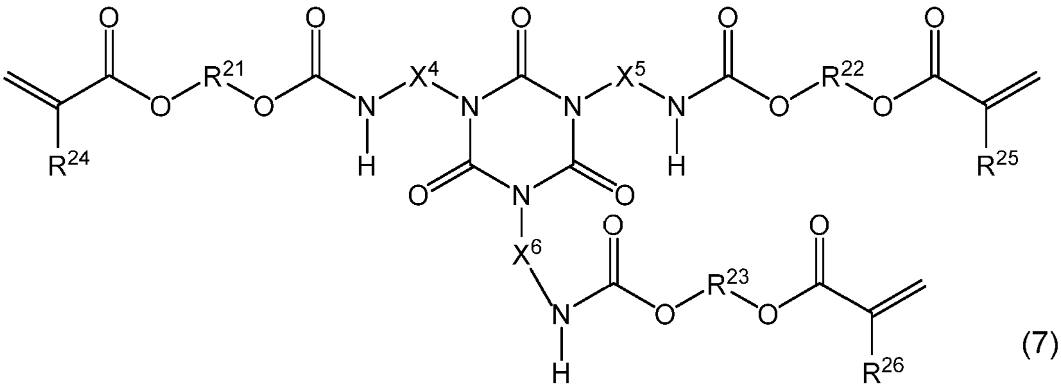

(7)

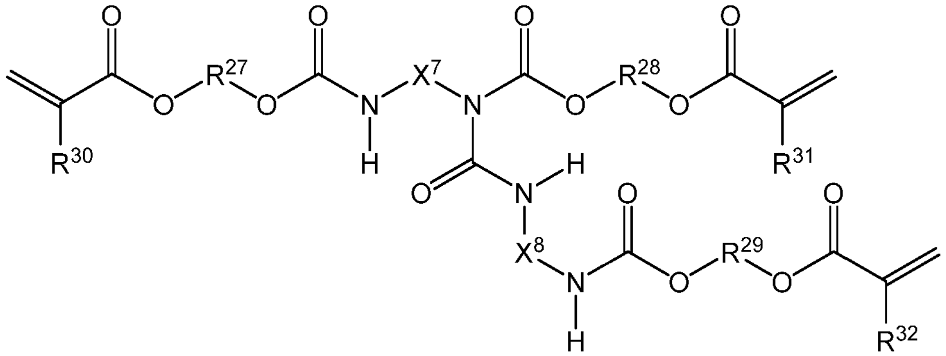

(8)

In the formulae (7) and (8), $R^{21}$ to $R^{23}$ and $R^{27}$ to $R^{29}$ each independently represent a linear or branched alkylene group having 1 to 10 carbon atoms.

$R^{24}$ to $R^{26}$ and $R^{30}$ to $R^{32}$ each independently represent a hydrogen atom or a methyl group, and preferably a hydrogen atom.

$X^4$ to $X^6$, $X^7$, and $X^8$ each independently represent an alkylene group having 2 to 17 carbon atoms, preferably an alkylene group having 2 to 10 carbon atoms, more preferably an alkylene group having 4 to 8 carbon atoms, and particularly preferably a linear alkyl group.

Specific examples of the compound (7) include a compound obtained by a reaction between an isocyanurate modified body obtained by trimerizing an aliphatic polyisocyanate such as 1,4-butane diisocyanate, 1,5-pentane diisocyanate, or 1,6-hexamethylene diisocyanate, and 2-hydroxyethyl (meth)acrylate, 2-hydroxypropyl (meth)acrylate, 3-hydroxypropyl (meth)acrylate, 4-hydroxybutyl (meth)acrylate, or 2-hydroxybutyl (meth)acrylate.

Specific examples of the compound (8) include a compound obtained by a reaction between an allophanate modified body obtained by converting an aliphatic polyisocyanate such as 1,4-butane diisocyanate, 1,5-pentane diisocyanate, or 1,6-hexamethylene diisocyanate into an allophanate and 2-hydroxyethyl (meth)acrylate, 2-hydroxypropyl (meth)acrylate, 3-hydroxypropyl (meth)acrylate, 4-hydroxybutyl (meth)acrylate, or 2-hydroxybutyl (meth)acrylate.

The component (D) may contain the compound (7) alone, the compound (8) alone, or both the compounds (7) and (8).

In the case of using only any one of the compounds (7) and (8), the compound (7) is preferably used. This is because the compound (7) is more excellent in weather resistance and abrasion resistance.

The content of the component (D) is 1 to 40% by mass, preferably 3 to 34% by mass, and particularly preferably 6 to 30% by mass, relative to 100% by mass of the total solid content of the components (A) to (D). When it is equal to or more than the lower limit value, weather resistance is improved. When it is equal to or less than the upper limit value, a decrease in adherence in an ultra-high temperature and high humidity environment can be prevented.

Relative to 100% by mass of the whole solid content of the composition of the present invention, that is, relative to 100% by mass of the whole amount of the composition except a solvent such as an organic solvent, the content of the component (D) is not particularly limited, but is preferably 0.25 to 40% by mass, more preferably 1.25 to 34% by mass, and still more preferably 1.75 to 30% by mass.

[Other Component]

The composition of the present invention may optionally contain a component other than the components (A) to (D) as long as the effects of the present invention are obtained.

Typical examples of the other component include a reactive compound, an organic solvent, various types of resins, a filler, a polymerization initiator, an ultraviolet absorber, and a leveling agent. The composition may further contain an inorganic pigment, an organic pigment, an extender pigment, a clay mineral, a wax, a catalyst, a surfactant, a stabilizer, a fluid adjustor, a coupling agent, a dye, a rheology control agent, an anti-oxidant and a plasticizer.

As the reactive compound, a (meth)acrylate compound other than the components (A) to (D) or a compound having a double bond like a vinyl group may be blended. Examples of the (meth)acryloyl-containing compound include a monofunctional (meth)acrylate and a polyfunctional (meth)acrylate.

Examples of the monofunctional (meth)acrylate include alkyl (meth)acrylates having an alkyl group having 1 to 22 carbon atoms, such as methyl (meth)acrylate, ethyl (meth)acrylate, n-propyl (meth)acrylate, n-butyl (meth)acrylate, isobutyl (meth)acrylate, tert-butyl (meth)acrylate, 2-ethylhexyl (meth)acrylate, and lauryl (meth)acrylate; cycloalkyl (meth) acrylates such as cyclohexyl (meth)acrylate and isobornyl (meth)acrylate; a ω-alkoxyalkyl (meth)acrylates such as 2-methoxyethyl (meth)acrylate and 4-methoxybutyl (meth)acrylate;
hydroxyethyl (meth)acrylate, hydroxypropyl (meth)acrylate, hydroxybutyl (meth)acrylate, caprolactone-modified hydroxy(meth)acrylate (for example, product name "PLACCEL" manufactured by Daicel Corporation), a polycarbonate-modified hydroxy(meth)acrylate, a mono(meth)acrylate of a polyester diol obtained from phthalic acid and propylene glycol, a mono(meth)acrylate of a polyester diol obtained from succinic acid and propylene glycol, polyethylene glycol mono(meth)acrylate, polypropylene glycol mono(meth)acrylate, 2-hydroxy-3-(meth)acryloyloxypropyl (meth)acrylate, and (meth)acrylic acid adducts of various types of epoxy esters.

Examples of the polyfunctional (meth)acrylate include 1,4-butanediol di(meth)acrylate, 1,6-hexanediol di(meth) acrylate, 1,9-nonanediol di(meth)acrylate, neopentyl glycol di(meth)acrylate, polyethylene glycol di(meth)acrylate modified with ethylene oxide, polypropylene glycol di(meth)acrylate modified with propylene oxide, polytetramethylene glycol di(meth)acrylate modified with tetramethylene oxide, glycerol tri(meth)acrylate modified with ethylene oxide, glycerol tri(meth)acrylate modified with propylene oxide, trimethylolpropane tri(meth)acrylate, ditrimethylolpropane tetra(meth) acrylate, hydroxypivalic acid-modified trimethylolpropane tri(meth)acrylate, trimethylolpropane tri(meth)acrylate modified with ethylene oxide, trimethylolpropane tri(meth)acrylate modified with propylene oxide, tri(meth)acrylate phosphate modified with ethylene oxide, pentaerythritol tetra(meth)acrylate modified with ethylene oxide, pentaerythritol tetra(meth) acrylate modified with propylene oxide, pentaerythritol tetra(meth)acrylate modified with tetraethylene oxide, dipentaerythritol hexa(meth)acrylate modified with ethylene oxide, dipentaerythritol hexa(meth)acrylate modified with propylene oxide, dipentaerythritol hexa(meth)acrylate modified with tetraethylene oxide, caprolactone-modified pentaerythritol tetra(meth)acrylate, caprolactone-modified dipentaerythritol hexa(meth)acrylate, urethane (meth)acrylate compounds obtained by a reaction between an isocyanate compound and an alcohol-based compound, polyester (meth)acrylate compounds synthesized by a condensation reaction of a polyhydric alcohol, and (meth)acrylic acid, and a polyfunctional carboxylic acid, and epoxy (meth)acrylate compounds and acrylic acrylate compounds synthesized by an addition reaction of a bisphenol type epoxy resin, a novolak type epoxy resin, a glycidyl group-containing acrylic polymer, and a (meth)acrylic acid.

The reactive compound may be used alone, or two or more types thereof may be used in combination. The amount of the reactive compound used is preferably 0 to 300% by mass relative to 100% by mass of the total solid content of the components (A) to (D) from the viewpoint of resistance to ultra-high temperature and high humidity, weather resistance, and abrasion resistance.

Examples of the organic solvent include an ester solvent, a ketone solvent, an ether solvent, an aliphatic solvent, an aromatic solvent, and an alcoholic solvent.

Specific examples of the ester solvent include ethyl acetate, propyl acetate, and butyl acetate. Specific examples of the ketone solvent include acetone, 2-butanone, methyl ethyl ketone, and methyl isobutyl ketone. Specific examples of the ether solvent include tetrahydrofuran and dioxolane. Specific examples of the aliphatic solvent include hexane and cyclohexane. Specific examples of the aromatic solvent include toluene and xylene. Specific examples of the alcoholic solvent include ethanol, methanol, propanol, butanol, and propylene glycol monomethyl ether.

For viscosity adjustment, a liquid organic polymer may be used. The liquid organic polymer is a liquid organic polymer that does not directly contribute to a curing reaction. Examples thereof include a carboxy group-containing polymer modified product (FLOWLEN G-900, NC-500: Kyoeisha Chemical Co., Ltd.), an acrylic polymer (FLOWLEN WK-20: Kyoeisha Chemical Co., Ltd.), an amine salt of specialized modified phosphate (HIPLAAD ED-251: Kusumoto Chemicals, Ltd.), and a modified acrylic block copolymer (DISPEPBYK2000: BYK).

As various types of resins, a thermosetting resin or a thermoplastic resin may be used.

The thermosetting resin is a resin having a property in which a change into a substantial insoluble and infusible state can occur during curing by means such as heating, radiation, or catalysis. Specifically, the thermosetting resin is a

resin having a property in which a change into a substantial insoluble and infusible state can occur during curing by means such as heating, radiation, or catalysis. Specific examples thereof include a phenol resin, a urea resin, a melamine resin, a benzoguanamine resin, an alkyd resin, an unsaturated polyester resin, a vinyl ester resin, a diallyl terephthalate resin, an epoxy resin, a silicone resin, a urethane resin, a furan resin, a ketone resin, a xylene resin, a thermosetting polyimide resin, a benzoxazine resin, an active ester resin, an aniline resin, a cyanate ester resin, and a styrene-maleic anhydride (SMA) resin. One or two or more types of the thermosetting resins may be used in combination.

The thermoplastic resin refers to a resin that can be melt-molded under heating. Specific examples thereof include a polyethylene resin, a polypropylene resin, a polystyrene resin, a rubber-modified polystyrene resin, an acrylonitrile-butadiene-styrene (ABS) resin, an acrylonitrile-styrene (AS) resin, a polymethyl methacrylate resin, an acrylic resin, a polyvinyl chloride resin, a polyvinylidene chloride resin, a polyethylene terephthalate resin, an ethylene-vinyl alcohol resin, a cellulose acetate resin, an ionomer resin, a polyacrylonitrile resin, a polyamide resin, a polyacetal resin, a polybutylene terephthalate resin, a polylactic acid resin, a polyphenylene ether resin, a modified polyphenylene ether resin, a polycarbonate resin, a polysulfone resin, a polyphenylene sulfide resin, a polyetherimide resin, a polyether sulfone resin, a polyarylate resin, a thermoplastic polyimide resin, a polyamideimide resin, a polyetherether ketone resin, a polyketone resin, a liquid crystal polyester resin, a fluororesin, a syndiotactic polystyrene resin, and a cyclic polyolefin resin. One or two or more types of the thermoplastic resins may be used in combination.

As the filler, for example, silica can be blended to improve hardcoat properties.

A publicly known silica fine particles such as powdered silica or colloidal silica can be used as the silica without limitation. Examples of commercially available powdered silica fine particles include AEROSIL 50 and 200 manufactured by NIPPON AEROSIL CO., LTD., Sildex H31, H32, H51, H52, H121, and H122 manufactured by Asahi Glass Co., Ltd., E220A and E220 manufactured by Nippon Silica Industrial Co., Ltd., SYLYSIA470 manufactured by FUJI SILYSIA CHEMICAL, LTD., and SG flake manufactured by Nippon Sheet Glass Co., Ltd.

Examples of commercially available colloidal silica include methanol silica sol, IPA-ST, MEK-ST, PGM-ST, NBA-ST, XBA-ST, DMAC-ST, ST-UP, ST-OUP, ST-20, ST-40, ST-C, ST-N, ST-O, ST-50, and ST-OL manufactured by Nissan Chemical Corporation.

Silica may be reactive silica. Examples of the reactive silica include reactive compound-modified silica. Examples of the reactive compound include a reactive silane coupling agent having a hydrophobic group, a compound having a (meth)acryloyl group, a compound having a maleimide group, and a compound having a glycidyl group.

Examples of commercially available powdered silica modified with a compound having a (meth)acryloyl group include AEROSIL RM50 and R711 manufactured by NIPPON AEROSIL CO., LTD. Examples of commercially available colloidal silica modified with a compound having a (meth)acryloyl group include MIBK-SD, MIBK-SD-L, MIBK-AC-2140Z, and MEK-AC-2140Z manufactured by Nissan Chemical Corporation. Examples of the reactive silica include silica that is modified with a glycidyl group in 3-glycidoxypropyltrimethoxysilane followed by an addition reaction with acrylic acid, and silica that is modified with a compound obtained by a urethane formation reaction between 3-isocyanate propyltriethoxysilane and a compound having a hydroxy group and a (meth)acryloyl group. From the viewpoint of transparency and abrasion resistance, the commercially available colloidal silica modified with a compound having a (meth)acryloyl group is preferably MIBK-SD, MIBK-SD-L, MIBK-AC-2140Z, or MEK-AC-2140Z manufactured by Nissan Chemical Corporation.

The shape of the silica fine particles is not particularly limited. Spherical, hollow, porous, rod-like, plate-like, fibrous, or irregular shape silica fine particles can be used. For example, as commercially available hollow silica fine particles, SiliNax manufactured by Nittetsu Mining Co., Ltd., can be used.

The primary particle diameter thereof is preferably within the range of 5 to 200 nm. When it is 5 nm or more, inorganic fine particles are sufficiently dispersed in the composition. When it is 200 nm or less, the sufficient strength of a cured product can be held. From the viewpoint of transparency, the primary particle diameter is preferably 5 to 100 nm.

The amount of the silica blended is preferably 0.5 to 60% by mass, and from the viewpoint of transparency, weather resistance, and abrasiveness, more preferably 1 to 30% by mass, relative to 100% by mass of the composition.

Examples of a filler other than silica include an inorganic filler and an organic filler. The shape of the filler is not limited. Examples of the filler include particular, plate-like, and fibrous fillers.

Examples of a filler having excellent heat resistance include alumina, magnesia, titania, and zirconia. Examples of a filler having excellent thermal conduction include boron nitride, aluminum nitride, alumina oxide, titanium oxide, magnesium oxide, zinc oxide, and silicon oxide. Examples of a filler having excellent conductivity include a metal filler and/or a metal-coating filler made of a metal simple substance or alloy (for example, iron, copper, magnesium, aluminum, gold, silver, platinum, zinc, manganese, and stainless). Examples of a filler having excellent barrier properties include minerals such as mica, clay, kaolin, talc, zeolite, wollastonite, and smectite, potassium titanate, magnesium sulfate, sepiolite, zonolite, aluminum borate, calcium carbonate, titanium oxide, barium sulfate, zinc oxide, and magnesium hydroxide. Examples of a filler having high refractive index include barium titanate, zirconia oxide, and titanium oxide. Examples of a photocatalytic filler include photocatalytic metals such as titanium, cerium, zinc, copper, aluminum, tin, indium, phosphorus, carbon, sulfur, thallium, nickel, iron, cobalt, silver, molybdenum, strontium, chromium, barium, and lead, composites of the metals, and oxides thereof. Examples of a filler having excellent abrasion resistance include

metals such as alumina, zirconia, and magnesium oxide, and composites and oxides thereof. Examples of a filler having excellent conductivity include metals such as silver and copper, tin oxide, and indium oxide. Examples of a filler that is excellent in ultraviolet light shielding include titanium oxide and zinc oxide.

These inorganic fine particles may be appropriately selected according to an application. The inorganic fine particles may be used alone, or a plurality of types thereof may be used in combination. Since the inorganic particles have various properties in addition to the properties described as examples, the inorganic fine particles may be appropriately selected according to an application.

Examples of the inorganic fibers include inorganic fibers such as a carbon fiber, a glass fiber, a boron fiber, an alumina fiber, and a silicon carbide fiber, a carbon fiber, an activated carbon fiber, a graphite fiber, a glass fiber, a tungsten carbide fiber, a silicon carbide fiber, a ceramic fiber, an alumina fiber, a natural fiber, fibers of minerals such as basalt, a boron fiber, a boron nitride fiber, a boron carbide fiber, and a metal fiber. Examples of the metal fiber include an aluminum fiber, a copper fiber, a brass fiber, a stainless steel fiber, and a steel fiber.

Examples of the organic fibers include synthetic fibers formed from resin materials such as polybenzazole, aramid, polyparaphenylene benzoxazole (PBO), a polyphenylene sulfide, a polyester, acryl, a polyamide, a polyolefin, a polyvinyl alcohol, and a polyarylate, natural fibers such as cellulose, pulp, cotton, wool, and silk, and regenerated fibers of a protein, a polypeptide, and alginic acid.

The amount of the filler blended is preferably 0.5 to 60% by mass, and more preferably 1 to 30% by mass, relative to 100% by mass of the composition.

Since the composition of the present invention is cured by an active energy ray, use of a polymerization initiator, particularly a photopolymerization initiator is preferred. As the photopolymerization initiator, a publicly known photopolymerization initiator may be used. For example, one or more selected from the group consisting of acetophenones, benzyl ketals, and benzophenones can be preferably used.

Specific examples of the photopolymerization initiator include acetophenone compounds such as 2,2-dimethoxy-1,2-diphenylethan-1-one, 1-hydroxy-cyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-methyl-1-[4-(methylthio)phenyl]-2-morpholinopropan-1-one, 2-benzyl-2-dimethylamino-1-(4-morpholinophenyl)-butan-1-one, diethoxy acetophenone, oligo{2-hydroxy-2-methyl-1-[4-(1-methylvinyl)phenyl]propane}, and 2-hydroxy-1-{4-[4-(2-hydroxy-2-methylpropionyl)benzyl]phenyl}-2-methyl-propan-1-one; benzophenone compounds such as benzophenone, 4-phenylbenzophenone, 2,4,6-trimethylbenzophenone, and 4-benzoyl-4'-methyl-diphenyl sulfide; $\alpha$-ketoester compounds such as methylbenzoyl formate, oxy-phenylacetic acid 2-(2-oxo-2-phenylacetoxyethoxy)ethyl ester, and oxy-phenylacetic acid 2-(2-hydroxyethoxy) ethyl ester; phosphine oxide compounds such as 2,4,6-trimethylbenzoyl diphenyl phosphine oxide, bis(2,4,6-trimethylbenzoyl) phenyl phosphine oxide, and bis(2,6-methoxybenzoyl)-2,4,4-trimethylpentylphosphine oxide; benzoin compounds such as benzoin, benzoin methyl ether, benzoin ethyl ether, benzoin isopropyl ether, and benzoin isobutyl ether; a titanocene compounds; acetophenone/benzophenone hybrid-based photoinitiators such as 1-[4-(4-benzoylphenylsulfanyl)phenyl]-2-methyl-2-(4-methylphenylsulfinyl)propan-1-one; oxime ester-based photopolymerization initiators such as 2-(O-benzoyloxime)-1-[4-(phenylthio)]-1,2-octanedione; and camphorquinone.

The photopolymerization initiator may be used alone, or two or more types thereof may be used in combination. The amount of the photopolymerization initiator used is preferably 1 to 15% by mass, and more preferably 2 to 10% by mass, relative to 100% by mass of the composition.

To improve weather resistance, an ultraviolet absorber may be blended in the composition of the present invention. As the ultraviolet absorber, various compounds or substances may be used.

Specific examples of the ultraviolet absorber include benzotriazine-based ultraviolet absorbers such as 2-[4-[(2-hydroxy-3-dodecyloxypropyl)oxy]-2-hydroxy-phenyl]-4,6-bis(2,4-dimethylphenyl)-1,3,5-triazine, 2-[4-[(2-hydroxy-3-tridecyloxypropyl)oxy]-2-hydroxy-phenyl]-4,6-bis(2,4-dimethylphenyl)-1,3,5-triazine, 2-[4-[(2-hydroxy-3-(2-ethyl-hexyloxy)propyl)oxy]-2-hydroxy-phenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine; benzotriazole-based ultraviolet absorber such as 2-(2H-benzotriazol-2-yl)-4,6-bis(1-methyl-1-phenylethyl)phenol, 2-(2-hydroxy-5-tert-butylphenyl)-2H-benzotriazole, and 2-[2-hydroxy-5-(2-(meth)acryloyloxyethyl) phenyl]-2H-benzotriazole; benzophenone-based ultraviolet absorbers such as 2,4-dihydroxybenzophenone and 2-hydroxy-4-methoxybenzophenone, cyanoacrylate-based ultraviolet absorbers such as ethyl-2-cyano-3,3-diphenyl acrylate and octyl-2-cyano-3,3-diphenyl acrylate, and inorganic fine particles that absorb ultraviolet light such as titanium oxide fine particles, zinc oxide fine particles, and tin oxide fine particles. The ultraviolet absorbers described above may be used alone, or two or more types thereof may be used in combination.

As the ultraviolet absorber, a commercially available product can be used. As the commercially available product, TINUVIN PS (manufactured by BASF), TINUVIN 99-2 (manufactured by BASF), TINUVIN234 (manufactured by BASF), TINUVIN326 (manufactured by BASF), TINUVIN329 (manufactured by BASF), TINUVIN900 (manufactured by BASF), TINUVIN928 (manufactured by BASF), TINUVIN360 (manufactured by BASF), TINUVIN384-2 (manufactured by BASF), RUVA93 (manufactured by Otsuka Chemical Co., Ltd.), TINUVIN400 (manufactured by BASF), TINUVIN405 (manufactured by BASF), TINUVIN460 (manufactured by BASF), TINUVIN477 (manufactured by BASF), TINUVIN479 (manufactured by BASF), ADK STAB LA-46 (manufactured by ADEKA CORPORATION), ADK STAB LA-F70 (manufactured by ADEKA CORPORATION), ADK STAB LA-29 (manufactured by ADEKA CORPORATION), ADK STAB LA-31G (manufactured by ADEKA CORPORATION), ADK STAB LA-32 (manufactured by ADEKA CORPORATION), or ADK STAB LA-36 (manufactured by ADEKA CORPORATION) can be used.

The amount of the ultraviolet absorber used is preferably 0.5 to 20% by mass, and more preferably 1 to 10% by mass, relative to 100% by mass of the composition.

To improve weather resistance, a hindered amine-based light stabilizer may be blended in the composition of the present invention.

As the hindered amine-based light stabilizer, a publicly known hindered amine-based light stabilizer can be used. Specific examples thereof include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, bis(1-dodecyloxy-2,2,6,6-tetramethyl-4-piperidyl) sebacate, bis(1,2,2,6,6-pentamethyl-4-piperidyl)-2-(4-methoxy-benzylidene) malonate, tetrakis(2,2,6,6-pentamethyl-4-piperidyl) 1,2,3,4-butanetetracarboxylate, tetrakis(1,2,2,6,6-pentamethyl-4-piperidyl) 1,2,3,4-butanetetracarboxylate, a condensate of 1,2,3,4-butanetetracarboxylic acid, 1,2,2,6,6-pentamethyl-4-piperidinol, and β,β,β,β-tetramethyl-3,9-(2,4,8,10-tetraoxaspiro[5,5]-undecane)diethanol, and a condensate of 1,2,3,4-butanetetracarboxylic acid, 2,2,6,6-pentamethyl-4-piperidinol, and β,β,β,β-tetramethyl-3,9-(2,4,8,10-tetraoxaspiro[5,5]-undecane)diethanol.

As the hindered amine-based light stabilizer, a commercially available product can be used. As the commercially available product, TINUVIN123 (manufactured by BASF), TINUVIN292 (manufactured by BASF), TINUVIN152 (manufactured by BASF), TINUVIN144 (manufactured by BASF), TINUVIN622SF (manufactured by BASF), TINUVIN111FDL (manufactured by BASF), TINUVIN249 (manufactured by BASF), ADK STAB LA-52 (manufactured by BASF), ADK STAB LA-57 (manufactured by ADEKA CORPORATION), ADK STAB LA-63P (manufactured by ADEKA CORPORATION), ADK STAB LA-68 (manufactured by ADEKA CORPORATION), ADK STAB LA-72 (manufactured by ADEKA CORPORATION), ADK STAB LA-81 (manufactured by ADEKA CORPORATION), ADK STAB LA-82 (manufactured by ADEKA CORPORATION), or ADK STAB LA-87 (manufactured by ADEKA CORPORATION) can be used.

The amount of the hindered amine-based light stabilizer used is preferably 0.01 to 10% by mass, and more preferably 0.1 to 5% by mass, relative to 100% by mass of the composition.

To enhance leveling properties or to enhance the slidability of a cured film to improve scratch resistance, various types of surface modifiers may be added to the composition of the present invention. As the surface modifier, various types of additives that modify surface physical properties and are commercially available under the designation of a surface adjustor, a leveling agent, a slidability-imparting agent, or a soil-resistance-imparting agent, can be used. Among the surface modifiers, a silicone-based surface modifier and a fluorinated surface modifier are suitable.

Specific examples thereof include silicone-based polymers and oligomers having a silicone chain and a polyalkylene oxide chain, silicone-based polymers and oligomers having a silicone chain and a polyester chain, fluorinated polymers and oligomers having a perfluoroalkyl group and a polyalkylene oxide chain, and fluorinated polymers and oligomers having a perfluoroalkyl ether chain and a polyalkylene oxide chain. One or more of these may be used. To enhance persistence of slidability, a compound containing a (meth)acryloyl group in the molecule may be used. Specific examples of the surface modifier include EBECRYL350 (manufactured by DAICEL-ALLNEX LTD.), BYK-333 (manufactured by BYK), BYK-377 (manufactured by BYK), BYK-378 (manufactured by BYK), BYK-UV3500 (manufactured by BYK), BYK-UV3505 (manufactured by BYK), BYK-UV3576 (manufactured by BYK), MEGAFACE RS-75 (manufactured by DIC Corporation), MEGAFACE RS-76-E (manufactured by DIC Corporation), MEGAFACE RS-72-K (manufactured by DIC Corporation), MEGAFACE RS-76-NS (manufactured by DIC Corporation), MEGAFACE RS-90 (manufactured by DIC Corporation), MEGAFACE RS-91 (manufactured by DIC Corporation), MEGAFACE RS-55 (manufactured by DIC Corporation), OPTOOL DAC-HP (manufactured by Daikin Industries, Ltd.), ZX-058-A (manufactured by T&K TOKA CO., LTD.), ZX-201 (manufactured by T&K TOKA CO., LTD.), ZX-202 (manufactured by T&K TOKA CO., LTD.), ZX-212 (manufactured by T&K TOKA CO., LTD.), ZX-214-A (manufactured by T&K TOKA CO., LTD.), X-22-164AS (manufactured by Shin-Etsu Chemical Co., Ltd.), X-22-164A (manufactured by Shin-Etsu Chemical Co., Ltd.), X-22-164B (manufactured by Shin-Etsu Chemical Co., Ltd.), X-22-164C (manufactured by Shin-Etsu Chemical Co., Ltd.), X-22-164E (manufactured by Shin-Etsu Chemical Co., Ltd.), and X-22-174DX (manufactured by Shin-Etsu Chemical Co., Ltd.).

When the active-energy-ray-curable coating composition of the present invention is applied to at least one surface of various materials and then irradiated with an active energy ray, the resulting cured film can be suitably used as a film for protecting the substrate. Since the cured film formed from the composition of the present invention has high heat

resistance and resistance to humidity and heat in addition to abrasion resistance, and is excellent in adherence to the materials even in a high temperature and high humidity environment, the cured film exerts excellent effects during use as a protective film for a material in a severe high humidity environment or during long-term use outsides.

<Molded Article>

(Configuration and Material)

A molded article of the present invention includes the cured film of the active-energy-ray-curable coating composition of the present invention and a substrate.

The substrate is not particularly limited, and may be appropriately selected according to an application. Examples of the substrate include plastics, woods, metals, metal oxides, paper, silicone, and modified silicone. The substrate may be one obtained by connecting different materials.

The shape of the substrate is not particularly limited, and may be any shape according to purposes, such as a flat plate, a sheet shape, or a three-dimensional shape wholly or partially having a curvature. The hardness and thickness of the substrate are not limited.

The active-energy-ray-curable coating composition of the present invention has excellent adherence particularly to a plastic substrate (resin substrate). Since the resin material has low abrasion resistance as described above, the molded article has defects in which luster and transparency are easily deteriorated and weather resistance is low. Therefore, the defects can be reduced by covering with the composition of the present invention.

The plastic substrate is not particularly limited as long as it is formed from a resin. For example, the aforementioned thermosetting resin or thermoplastic resin may be used. The substrate may be a substrate obtained by blending a resin alone or a plurality of types of resins. The substrate may have a single layer or a laminated structure of two or more layers. The plastic substrate may be fiber reinforced (fiber-reinforced plastics: FRP).

To obtain a transparent molded article, the plastic substrate is preferably formed from a polycarbonate resin (for example, an aliphatic polycarbonate, an aromatic polycarbonate, or an alicyclic polycarbonate), a polymethyl methacrylate resin, or a polystyrene resin.

The substrate may contain a publicly known antistatic agent, or a publicly known additive such as an antifogging agent, an antiblocking agent, an ultraviolet absorber, an antioxidant, a pigment, an organic filler, an inorganic filler, a light stabilizer, a crystal nucleating agent, or a lubricant as long as the effects of the present invention are not impaired.

The molded article of the present invention may further have a second substrate on the substrate and the cured film. Examples of a material for the second substrate include, but are not particularly limited to, woods, metals, metal oxides, plastics, paper, silicone, and modified silicone. The second substrate may be a substrate obtained by connecting different materials. The shape of the substrate is not particularly limited, and may be any shape according to purposes, such as a flat plate, a sheet shape, or a three-dimensional shape wholly or partially having a curvature. The hardness and thickness of the substrate are not limited.

Since the molded article of the present invention has high adherence to a plastic and an inorganic substance, the molded article can be preferably used as a material for layers between different materials. It is particularly preferable that the substrate be a plastic and the second substrate be an inorganic layer. Examples of an inorganic layer include quartz, sapphire, glass, an optical film, a ceramic material, an inorganic oxide, a vapor deposition film (CVD, PVD, and sputter), a magnetic film, a reflection film, metals such as Ni, Cu, Cr, Fe, and stainless, paper, spin on glass (SOG), spin on carbon (SOC), plastic layers formed from a polyester, a polycarbonate, and a polyimide, a TFT array substrate, an electrode plate of PDP, a conductive substrate formed of ITO and a metal, an insulating substrate, and silicon-containing substrates of silicon, silicon nitride, polysilicon, silicon oxide, and amorphous silicon.

(Production Method)

The molded article of the present invention is obtained by covering the surface of the substrate with the composition of the present invention.

The covering of the substrate may be performed by a method for directly applying the composition to the substrate or directly molding the composition on the substrate, or a method for laminating a cured product of the composition.

In the case of direct applying, examples of the applying method include, but are not particularly limited to, a spraying method, a spin coating method, a dipping method, a roll-coating method, a blade coating method, a doctor roll method, a doctor blade method, a curtain coating method, a slit coating method, a screen printing method, and an inkjet method.

In the case of direct molding, examples thereof include in-mold molding, insert molding, vacuum molding, extrusion lamination molding, and press-molding.

In the case of laminating a cured product of the composition, a semi-cured product may be laminated on the substrate and completely cured, or a completely cured product may be laminated on the substrate.

Since the resin composition of the present invention contains a compound having a polymerizable unsaturated group, the resin composition can be cured by irradiation with an active energy ray.

Examples of the active energy ray include ultraviolet light, an electron beam, and ionizing radiation such as $\alpha$ ray, $\beta$ ray, and $\gamma$ ray. Among these, ultraviolet (UV) light is preferred from the viewpoint of curing properties and convenience.

In the case of using ultraviolet light as the active energy ray, examples of a device that emits ultraviolet light include a low-pressure mercury lamp, a high-pressure mercury lamp, an ultra-high-pressure mercury lamp, a metal halide lamp, an electrodeless lamp (fusion lamp), a chemical lamp, a blacklight lamp, a mercury-xenon lamp, a short arc lamp, a helium-cadmium laser, an argon laser, a sunlight ray, and an LED lamp. When using them, the applied or molded composition is irradiated with ultraviolet light having a wavelength of about 180 to 400 nm, the cured film or the cured product can be obtained. The irradiation dose of ultraviolet light irradiated is appropriately selected depending on the type and amount of the photopolymerization initiator used.

(Application)

Since a laminated body of the present application is excellent in hardcoat properties and weather resistance, the laminated body is particularly suitably usable as various protection materials. For example, the laminated body is usable for a building material, a housing facility, transport machines such as an automobile, a ship, an aircraft, and a train, an electronic material, a record material, an optical material, illuminations, a packaging material, protection of an object mounted outsides, covering an optical fiber and protection of resin glass.

[Examples]

Hereinafter, the present invention will be specifically described with reference to Examples and Comparative Examples, but the present invention is not limited to the following aspects. In Examples, "part(s)" and "%" are based on mass unless otherwise specified.

(Synthesis Example 1)

A 3-L separable flask equipped with a stirrer and an air blowing tube was charged with 84.51 g (1.0 mol of NCO) of hexamethylene diisocyanate ("Desmodur H" manufactured by Covestro, NCO content: 49.8%), 1.8 g of 2,6-di-tert-butyl-4-methylphenol, and 0.2 g of dibutyltin dilaurate. With stirring at a liquid temperature of 60 to 70°C, 719.23 g of ARONIX M-403 (product name (hereinafter referred to as "M-403") manufactured by TOAGOSEI CO., LTD., hydroxyl value: 78 mg KOH/g) was added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-0 corresponding to the compound (2).

(Synthesis Example 2)

A 3-L separable flask equipped with a stirrer and an air blowing tube was charged with 132.35 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 719.23 g of ARONIX M-403 (manufactured by TOAGOSEI CO., LTD., hydroxyl value: 76 mg KOH/g) was added dropwise. After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-1 corresponding to the compound (2).

(Synthesis Example 3)

A 3-L separable flask equipped with a stirrer and an air blowing tube was charged with 112.23 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 719.23 g of ARONIX M-403 (manufactured by TOAGOSEI CO., LTD., hydroxyl value: 78 mg KOH/g) was added dropwise. After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-2 corresponding to the compound (2).

(Synthesis Example 4)

A 3-L separable flask equipped with a stirrer and an air blowing tube was charged with 178.72 g (1.0 mol of NCO) of isocyanate compound containing as a main component a nurate trimer of 1,6-hexamethylene diisocyanate ("DURANATE TPA-100" manufactured by Asahi Kasei Chemicals Corp., NCO content: 23.5%), 1.8 g of 2,6-di-tert-butyl-4-methylphenol, and 0.2 g of dibutyltin dilaurate. With stirring at a liquid temperature of 60 to 70°C, 719.23 g of ARONIX M-403 (manufactured by TOAGOSEI CO., LTD., hydroxyl value: 78 mg KOH/g) was added dropwise. After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-3 corresponding to the compound (2).

(Synthesis Example 5)

A 1-L separable flask equipped with a stirrer and an air blowing tube was charged with 132.08 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 344 g of PLACCEL FA-2D (manufactured by Daicel Corporation, caprolactone-modified monoacrylate) was added dropwise.

After completion of the dropwise addition, the reaction solution was stirred at 80°C for 4 hours, and the disappearance of isocyanate group in the reaction solution was confirmed by IR analysis. The reaction was completed to obtain a urethane (meth)acrylate compound UA-4 corresponding to the compound (5).

(Synthesis Example 6)

A 1-L separable flask equipped with a stirrer and an air blowing tube was charged with 132.08 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 177 g of FA-2D (manufactured by Daicel Corporation) and 15.51 g of ethylene glycol were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-5 corresponding to the compound (4).

(Synthesis Example 7)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 248.88 g of PEG1000 (manufactured by SANYOKASEI CO., LTD., hydroxyl value: 113 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-6 corresponding to the compound (4).

(Synthesis Example 8)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 251.55 g of PLACCEL 210 (PCL210) (manufactured by Daicel Corporation, hydroxyl value: 111.5 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-7 corresponding to the compound (4).

(Synthesis Example 9)

A 1-L separable flask equipped with a stirrer and an air blowing tube was charged with 132.08 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 58.2 g

of 2-hydroxyethyl acrylate and 251.55 g of PCL210 (manufactured by Daicel Corporation, hydroxyl value: 111.5 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-8 corresponding to the compound (4).

(Synthesis Example 10)

A 1-L separable flask equipped with a stirrer and an air blowing tube was charged with 132.08 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 162.24 g of PTMG650 (polyoxytetramethylene glycol manufactured by Mitsubishi Chemical Corporation, hydroxyl value: 173 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-9 corresponding to the compound (4).

(Synthesis Example 11)

A 1-L separable flask equipped with a stirrer and an air blowing tube was charged with 132.08 g (1.0 mol of NCO) of 4,4'-methylenebis(cyclohexyl isocyanate) ("Desmodur W" manufactured by Covestro, NCO content: 31.8%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 246.27 g of PTMG1000 (polyoxytetramethylene glycol manufactured by Mitsubishi Chemical Corporation, hydroxyl value: 113.9 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-10 corresponding to the compound (4).

(Synthesis Example 12)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 123.95 g of PH-50 (polycarbonate diol synthesized from 1,6-hexanediol and 1,5-pentanediol: manufactured by UBE Corporation, hydroxyl value: 226.3 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-11 corresponding to the compound (4).

(Synthesis Example 13)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 244.78 g of PH-100 (polycarbonate diol synthesized from 1,6-hexanediol and 1,5-pentanediol: manufactured by UBE Corporation, hydroxyl value: 114.5 mg/KOH/g) were added dropwise.

After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-12 corresponding to the compound (4).

(Synthesis Example 14)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 224.84 g of UH-50 (polycarbonate diol synthesized from 1,6-hexanediol: manufactured by UBE Corporation, hydroxyl value: 224.7 mg/KOH/g) were added dropwise.

After completion of the dropwise addition, the reaction solution was stirred at 80°C for 4 hours, and the

disappearance of isocyanate group in the reaction solution was confirmed by IR analysis. The reaction was completed to obtain a urethane acrylate compound UA-13 corresponding to the compound (4).

(Synthesis Example 15)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 493.84 g of UH-200 (polycarbonate diol synthesized from 1,6-hexanediol: manufactured by UBE Corporation, hydroxyl value: 56.8 mg/KOH/g) were added dropwise.
After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-14 corresponding to the compound (4).

(Synthesis Example 16)

A 1.5-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 752 g of UH-300 (polycarbonate diol synthesized from 1,6-hexanediol: manufactured by UBE Corporation, hydroxyl value: 37.4 mg/KOH/g) were added dropwise.
After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-15 corresponding to the compound (4).

(Synthesis Example 17)

A 1-L separable flask equipped with a stirrer and an air blowing tube was charged with 112 g (1.0 mol of NCO) of isophorone diisocyanate ("Desmodur I" manufactured by Covestro, NCO content: 37.5%), 1.8 g of 2,6-di-tert-butyl-4-methylphenol, and 0.2 g of dibutyltin dilaurate. With stirring at a liquid temperature of 60 to 70°C, 58.2 g of 2-hydroxyethyl acrylate and 247.79 g of KURARAY POLYOL 1090S (polycarbonate diol synthesized from branched alkyl diol: polycarbonate diol manufactured by KURARAY CO., LTD., hydroxyl value: 113.2 mg/KOH/g) were added dropwise.
After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-16 corresponding to the compound (4).

(Synthesis Example 18)

A 1-L separable flask equipped with a stirrer and an air blowing tube was charged with 178.72 g (1.0 mol of NCO) of isocyanate compound containing as a main component a nurate trimer of 1,6-hexamethylene diisocyanate ("DURANATE TPA-100" manufactured by Asahi Kasei Chemicals Corp., NCO content: 23.5%), 1.8 g of 2,6-di-tert-butyl-4-methylphenol, and 0.2 g of dibutyltin dilaurate. With stirring at a liquid temperature of 60 to 70°C, 116.4 g (1.0 mol) of 2-hydroxyethyl acrylate was added dropwise.
After completion of the dropwise addition, the reaction solution was stirred at 80°C for 4 hours, and the disappearance of isocyanate group in the reaction solution was confirmed by IR analysis. The reaction was completed to obtain an isocyanuric ring-containing urethane acrylate compound UA-17 corresponding to the compound (7).

(Synthesis Example 19)

A 1-L separable flask equipped with a stirrer and an air blowing tube was charged with 215.38 g (1.0 mol of NCO) of isocyanate compound containing as a main component an allophanate product of 1,6-hexamethylene diisocyanate ("BASONAT HA3000" manufactured by BASF, NCO content: 19.5%), 1.8 g of 2,6-di-tert-butyl-4-methylphenol, and 0.2 g of dibutyltin dilaurate. With stirring at a liquid temperature of 60 to 70°C, 116.4 g (1.0 mol) of 2-hydroxyethyl acrylate was added dropwise.
After completion of the dropwise addition, the reaction solution was stirred at 80°C for 4 hours, and the disappearance of isocyanate group in the reaction solution was confirmed by IR analysis. The reaction was completed to obtain a urethane acrylate compound UA-18 corresponding to the compound (8).

(Example 1)

1% by mass of dipentaerythritol hexaacrylate as the compound (1) of the component (A), 30 parts by mass of 2-hydroxyethyl isocyanurate triacrylate ("SR368NS" manufactured by ARKEMA) as the compound (3) of the component (B), 29 parts by mass of aliphatic urethane diacrylate UA-4 as the compound (5) of the component (C), 40 parts by mass of urethane triacrylate having an isocyanurate bond UA-17 as the compound (7) of the component (D), 1.5 parts by mass of Omunirad754 (manufactured by IGM) and 1.5 parts by mass of Omunirad819 (manufactured by IGM) as a photoinitiator, 0.5 parts by mass of Tinuvin123 as HALS, 6 parts by mass of Tinuvin479 as an ultraviolet absorber, and a mixed solvent of propylene glycol monomethyl ether and methyl ethyl ketone (weight ratio of propylene glycol to methyl ethyl ketone of 90:10) as an organic solvent were uniformly mixed such that the solid content was 50% by mass, to prepare an active-energy-ray-curable coating composition in Example 1.

(Examples 2 to 41 and Comparative Examples 1 to 9)

An active-energy-ray-curable coating composition in each of the examples was obtained in the same manner as in Example 1 except that the composition was changed into each of compositions shown in Tables 1 to 7. In Tables 1 to 7, the components (Omunirad754, Omunirad819, Tinuvin123, Tinuvin479, and propylene glycol monomethyl ether) other than the components (A) to (D) are omitted. In Examples 2 to 41 and Comparative Examples 1 to 9, the compounds were used in the same manner as in Example 1.

[Production of Evaluation Sample]

The active-energy-ray-curable coating composition in each of the examples was applied to a polycarbonate substrate having a thickness of 3 mm ("Panlite L-1225ZL" manufactured by TEIJIN LIMITED) with a bar coater, dried at 80°C for 4 minutes, and then irradiated with ultraviolet light at an illuminance of 150 $mW \cdot cm^2$ and an amount of illumination light of 2,000 $mJ/m^2$ using an ultraviolet irradiation device (manufactured by GS-YUASA, high-pressure mercury lamp) in air, to obtain a polycarbonate laminated body having a cured coating film with a thickness of 10 μm.

[Evaluation of Abrasion Resistance]

The cured film surface on the surface of the evaluation sample in each of the examples was rubbed by a method in accordance with ANSI 2007 (truck wheel CS-10F, 500 g, 500 times). Thus, a Taber abrasion test was performed. A difference in haze value between the initial state and after the Taber abrasion test, that is, a change in haze value ΔHaze (%) was measured. Abrasion resistance was evaluated.

The light transmittance was measured using a haze meter, and the change in haze value before and after the test was calculated from a haze value obtained by the following equation.

$$Th = Td/Tt \times 100$$

(Th: haze value (%), Td: scattering light transmittance, Tt: total light transmittance)
ΔHaze of 10.0 or less was regarded as pass. ΔHaze is described in Tables 1 to 7 as abrasion resistance.

[Evaluation of Resistance to High Temperature and High Humidity]

For an evaluation sample in each of the examples that was allowed to stand under the conditions of a temperature of 120°C and a humidity of 98% RH for 0 to 40 hours using a pressure cooker tester, the adherence to a substrate was evaluated by visual confirmation of appearance and a cross cut adhesion test of 100 squares. The evaluation was performed on 0 hours (before the test) and after a lapse of 1, 5, 10, 20, 30, and 40 hours.

The evaluation result was a maximum time when peeling was not recognized by visual inspection of appearance and the cross cut adhesion test. A maximum time of 10 hours or more was regarded as pass. The results are described in Tables 1 to 7 as resistance to high temperature and high humidity.

[Evaluation of Weather Resistance]

The evaluation sample in each of the examples was subjected to an accelerated weathering test (SUV test) under the following conditions, and the coating film was visually evaluated.

Conditions: Irradiation (63°C, 70% RH, 4 hours), darkness (70°C, 90% RH, 4 hours), and dew condensation

(30°C, 98% RH, 4 hours) were repeated in this order. Before and after the irradiation, shower was applied.

The evaluation result was a maximum time when cracking of the coating film was not recognized. A maximum time of 720 hours or more was regarded as pass. When cracking of the coating film was not recognized after a lapse of 960 hours, ">960h" was recorded. The results are described in Tables 1 to 7 as weather resistance.

[Table 1]

| | Example | | | | | | | | |
|---|---|---|---|---|---|---|---|---|---|
| | 1 | 2 | 3 | 4 | 5 | 6 | 7 | 8 | 9 |
| A-1 | 1 | 40 | 30 | 20 | 5 | 5 | 25 | 7.5 | 5 |
| A-R1 | | | | | | | | | |
| UA-0 | | | | | | | | | |
| UA-1 | | | | | | | | | |
| UA-2 | | | | | | | | | |
| UA-3 | | | | | | | | | |
| B-1 | 30 | 30 | 34 | 30 | 85 | 50 | 50 | 80 | 80 |
| UA-4 | 29 | 29 | 1 | 30 | 5 | 15 | 20 | 2.5 | 2.5 |
| UA-5 | | | | | | | | | |
| UA-6 | | | | | | | | | |
| A-DCP | | | | | | | | | |
| UA-17 | 40 | 1 | 35 | 20 | 5 | 30 | 5 | 10 | 12.5 |
| UA-18 | | | | | | | | | |
| S-1 | | | | | | | | | |
| Abrasion resistanc e | 9.8 | 4.5 | 4.5 | 7.1 | 3.5 | 6.5 | 6.8 | 2.5 | 3.5 |
| Resistanc e to high temperat ure and high humidity | 10h | 10h | 10h | 10h | 10h | 20h | 20h | 20h | 20h |
| Weather resistanc e | 960h | 720h | 720h | 840h | 840h | 960h | 840h | 960h | 960h |

[Table 2]

| | Example | | | | | | | |
|---|---|---|---|---|---|---|---|---|
| | 10 | 11 | 12 | 13 | 14 | 15 | 16 | 17 |
| A-1 | 7 | 15 | 7 | 8 | 10 | 15 | 7 | 12.5 |
| A-R1 | | | | | | | | |
| UA-0 | | | | | | | | |
| UA-1 | | | | | | | | |
| UA-2 | | | | | | | | |
| UA-3 | | | | | | | | |
| B-1 | 60 | 60 | 75 | 75 | 65 | 65 | 65 | 65 |
| UA-4 | 8 | 10 | 4 | 10 | 5 | 4 | 15 | 10 |
| UA-5 | | | | | | | | |
| UA-6 | | | | | | | | |
| A-DCP | | | | | | | | |
| UA-17 | 25 | 15 | 14 | 7 | 20 | 16 | 13 | 12.5 |
| UA-18 | | | | | | | | |

(continued)

| | Example | | | | | | | |
|---|---|---|---|---|---|---|---|---|
| | 10 | 11 | 12 | 13 | 14 | 15 | 16 | 17 |
| S-1 | | | | | | | | |
| Abrasion resistanc e | 5.4 | 3.1 | 3.5 | 3.4 | 3.8 | 3.7 | 4.6 | 3.9 |
| Resistanc e to high temperat ure and high humidity | 30h | 30h | 30h | 30h | 30h | 30h | 30h | 30h |
| Weather resistanc e | >960 h | >960 h | >960 h | >960 h | >960 h | >960 h | >960 h | >960 h |

[Table 3]

| | Example | | | | | | |
|---|---|---|---|---|---|---|---|
| | 18 | 19 | 20 | 21 | 22 | 23 | 24 |
| A-1 | 12.5 | 12.5 | 12.5 | 12.5 | 12.5 | 12.5 | 12.5 |
| B-1 | 65 | 65 | 65 | 65 | 65 | 65 | 65 |
| UA-4 | | | | | | | |
| UA-5 | 10 | | | | | | |
| UA-6 | | | | 10 | | | |
| UA-7 | | 10 | | | | | |
| UA-8 | | | 10 | | | | |
| UA-9 | | | | | | 10 | |
| UA-10 | | | | | | | 10 |
| A-DCP | | | | | 10 | | |
| UA-17 | 12.5 | 12.5 | 12.5 | 12.5 | 12.5 | 12.5 | 12.5 |
| UA-18 | | | | | | | |
| S-1 | | | | | | | |
| Abrasion resistanc e | 4.0 | 3.8 | 3.8 | 5.0 | 3.0 | 3.6 | 3.6 |
| Resistanc e to high temperat ure and high humidity | 30h | 30h | 30h | 30h | 40h | 40h | 40h |
| Weather resistanc e | >960h | >960h | >960h | >960h | >960h | >960h | >960h |

[Table 4]

| | Example | | | | | | | |
|---|---|---|---|---|---|---|---|---|
| | 25 | 26 | 27 | 28 | 29 | 30 | 31 | 32 |
| A-1 | 12.5 | 12.5 | 12.5 | 12.5 | 12.5 | 12.5 | | |
| UA-0 | | | | | | | 12.5 | 12.5 |
| B-1 | 65 | 65 | 65 | 65 | 65 | 65 | 65 | 65 |
| UA-11 | | | | 10 | | | | |
| UA-12 | | | 10 | | | | | |
| UA-13 | | 10 | | | | | | |
| UA-14 | 10 | | | | | | 10 | |
| UA-15 | | | | | 10 | | | |
| UA-16 | | | | | | 10 | | |

(continued)

| | Example | | | | | | | |
|---|---|---|---|---|---|---|---|---|
| | 25 | 26 | 27 | 28 | 29 | 30 | 31 | 32 |
| A-DCP | | | | | | | | 10 |
| UA-17 | 12.5 | 12.5 | 12.5 | 12.5 | 12.5 | 12.5 | 12.5 | 12.5 |
| UA-18 | | | | | | | | |
| S-1 | | | | | | | | |
| Abrasion resistanc e | 3.0 | 3.0 | 3.0 | 3.0 | 4.1 | 4.1 | 2.5 | 2.5 |
| Resistan ce to high temperat ure and high humidity | 40h | 40h | 40h | 40h | 40h | 40h | 40h | 40h |
| Weather resistanc e | >960 h | >960 h | >960 h | >960 h | >960 h | >960 h | >960 h | >960 h |

[Table 5]

| | Example | | | | |
|---|---|---|---|---|---|
| | 33 | 34 | 35 | 36 | 37 |
| A-1 | | | | | |
| A-R1 | | | | | |
| UA-0 | | | | 12.5 | 11.25 |
| UA-1 | 12.5 | | | | |
| UA-2 | | 12.5 | | | |
| UA-3 | | | 12.5 | | |
| B-1 | 65 | 65 | 65 | 65 | 58.5 |
| UA-14 | 10 | 10 | 10 | 10 | |
| A-DCP | | | | | 9 |
| UA-17 | 12.5 | 12.5 | 12.5 | | 11.25 |
| UA-18 | | | | 12.5 | |
| S-1 | | | | | 10 |
| Abrasion resistance | 2.5 | 2.9 | 2.8 | 3.5 | 1.1 |
| Resistance to high temperature and high humidity | 40h | 40h | 40h | 40h | 40h |
| Weather resistance | >960h | >960h | >960h | 960h | >960h |

[Table 6]

| | Example | | | | Comparative Example | |
|---|---|---|---|---|---|---|
| | 38 | 39 | 40 | 41 | 1 | 2 |
| A-1 | | | | | 25 | |
| A-R1 | | | | | | 25 |
| UA-0 | 12.44 | 12.38 | 10 | 8.75 | | |
| UA-1 | | | | | | |
| UA-2 | | | | | | |
| UA-3 | | | | | | |
| B-1 | 64.67 | 64.34 | 52 | 45.5 | 50 | 50 |

(continued)

| | Example | | | | Comparative Example | |
|---|---|---|---|---|---|---|
| | 38 | 39 | 40 | 41 | 1 | 2 |
| UA-14 | | | | | | |
| A-DCP | 9.95 | 9.9 | 8 | 7 | | |
| UA-17 | 12.44 | 12.38 | 10 | 8.75 | 25 | 25 |
| UA-18 | | | | | | |
| S-1 | 0.5 | 1 | 20 | 30 | | |
| Abrasion resistance | 1.6 | 1.1 | 1.1 | 1.6 | 4.1 | 4.0 |
| Resistance to high temperature and high humidity | 40h | 40h | 40h | 40h | 5h | 5h |
| Weather resistance | >960h | >960h | >960h | 960h | 840h | 840h |

[Table 7]

| | Comparative Example | | | | | | |
|---|---|---|---|---|---|---|---|
| | 3 | 4 | 5 | 6 | 7 | 8 | 9 |
| A-1 | 40 | 5 | | 45 | 30 | 20 | 20 |
| B-1 | 25 | 90 | 40 | 30 | 45 | 30 | 30 |
| UA-4 | 1 | 1 | 25 | 5 | 25 | 5 | 35 |
| UA-5 | | | | | | | |
| UA-6 | | | | | | | |
| A-DCP | | | | | | | |
| UA-17 | 34 | 4 | 35 | 20 | | 45 | 15 |
| UA-18 | | | | | | | |
| S-1 | | | | | | | |
| Abrasion resistanc e | 7.1 | 3.5 | 11.5 | 6.1 | 8.5 | 10.2 | 11.2 |
| Resistanc e to high temperat ure and high humidity | 10h | 10h | 5h | 5h | 10h | 1h | 5h |
| Weather resistanc e | 600h | 600h | >960h | 600h | 480h | >960h | >960h |

Abbreviations in Tables 1 to 7 represent the following compounds or the compounds obtained in Synthesis Examples.

A-1: dipentaerythritol hexaacrylate (KAYARAD DPHA manufactured by Nippon Kayaku Co., Ltd.) (Compound (1))
A-R1: esterified product obtained by esterification between 6-hexanolide adduct of dipentaerythritol and acrylic acid ("KAYARAD DPCA-20" manufactured by Nippon Kayaku Co., Ltd.)
B-1: 2-hydroxyethyl isocyanurate triacrylate "M-315" manufactured by TOAGOSEI CO., LTD.; Compound (3))
A-DCP: dimethylol-tricyclodecane diacrylate ("A-DCP" manufactured by Shin Nakamura Chemical Co., Ltd.) (Compound (6))
S-1: silica fine particles ("MEK-AC2140Z" manufactured by Nissan Chemical Corporation)

As confirmed from the results of Examples 1 to 41, the cured film of the active-energy-ray-curable coating composition of the present invention has high abrasion resistance and weather resistance and are excellent in adherence to a substrate in a high temperature and high humidity environment.

On the other hand, in Comparative Examples 1 and 2 in which the component (C) is not contained, lower resistance to high temperature and high humidity was confirmed; in Comparative Examples 3 and 4 in which the content of the component (B) is not 30 to 85% by mass, lower weather resistance was confirmed; in Comparative Example 5 in which the component (A) is not contained, lower abrasion resistance and resistance to high temperature and high humidity were confirmed, in Comparative Example 6 in which the content of the component (A) is not 1 to 40 parts by mass, lower

resistance to high temperature and high humidity and weather resistance were confirmed; in Comparative Example 7 in which the component (D) is not contained, lower weather resistance was confirmed, in Comparative Example 8 in which the content of the component (D) is not 1 to 40 parts by mass, lower abrasion resistance and resistance to high temperature and high humidity were confirmed; and in Comparative Example 9 in which the content of the component (C) is not 1 to 30 parts by mass, lower abrasion resistance and resistance to high temperature and high humidity were confirmed.

## Claims

**1.** An active-energy-ray-curable coating composition comprising components (A) to (D):

as the component (A), a compound represented by the following general formula (1) or (2);
as the component (B), a compound represented by the following general formula (3);
as the component (C), a compound represented by the following general formula (4), (5), or (6); and
as the component (D), a compound represented by the following general formula (7) or (8), wherein
in a total solid content of the components (A) to (D), a content of the component (A) is 1% by mass or more and 40% by mass or less, a content of the component (B) is 30% by mass or more and 85% by mass or less, a content of the component (C) is 1% by mass or more and 30% by mass or less, and a content of the component (D) is 1% by mass or more and 40% by mass or less:

[Formula 1]

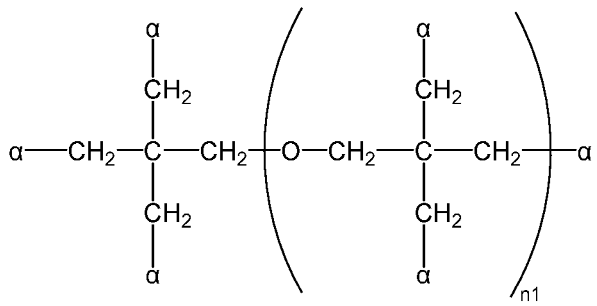

(1)

wherein at least three a's of a plurality of a's represent $CH_2=CR^1$-COO-, $R^1$ represents a hydrogen atom or a methyl group, the rest of a's represents a hydroxy group, and n1 represents an integer of 0 to 4;

[Formula 2]

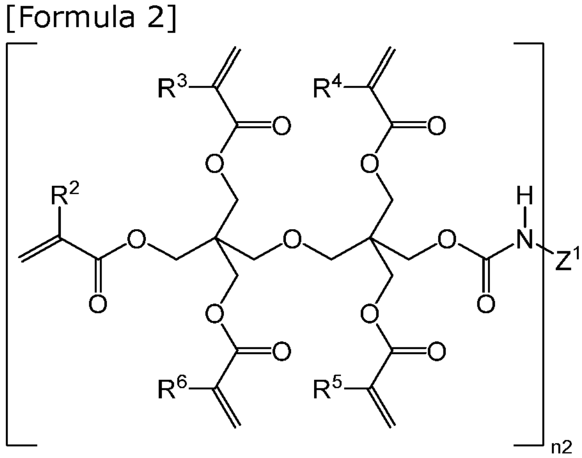

(2)

wherein $Z^1$ represents a structure derived from an aliphatic isocyanate or an alicyclic isocyanate, $R^2$ to $R^6$ each independently represent a hydrogen atom or a methyl group, and n2 represents an integer of 2 to 3; when the compound has a plurality of $R^2$'s to $R^6$'s, $R^2$'s to $R^6$'s are optionally same as or different from each other;

[Formula 3]

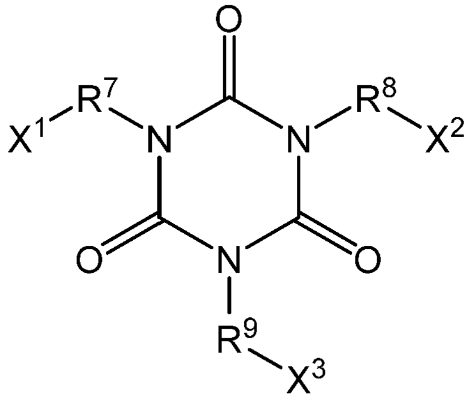

(3)

wherein $X^1$, $X^2$, and $X^3$ each independently represent $CH_2=CR^{10}$-CO-, $CH_2=CR^{10}$-CO(O$(CH_2)_5$-CO)$_{a1}$-, a hydrogen atom, or an alkyl group, $R^{10}$'s represent a hydrogen atom or a methyl group and are optionally same as or different from each other, and a1 is an integer 1 or more; at least two of $X^1$ to $X^3$ are $CH_2=CR^{10}$-CO- or $CH_2=CR^{10}$-CO(O$(CH_2)_5$-CO)$_{a1}$-, and $R^7$, $R^8$ , and $R^9$ each independently represent an oxyalkylene group or a polyoxyalkylene group;

[Formula 4]

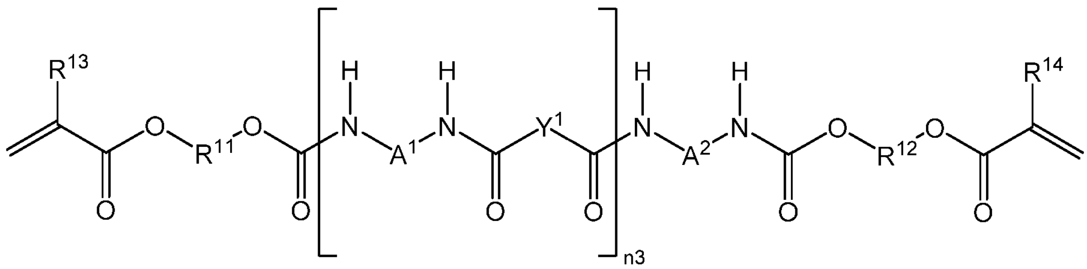

(4)

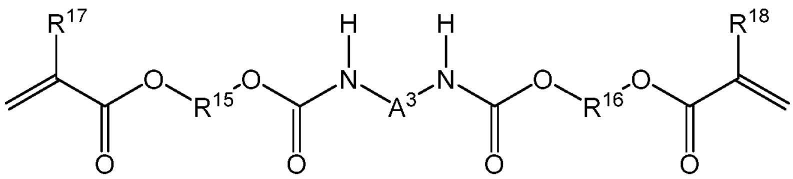

(5)

wherein $Y^1$ is a group formed by removal of two hydrogen atoms from a compound selected from the group consisting of a diol compound having a linear or branched alkylene group, a polycaprolactone diol, a polyether diol, and a polycarbonate diol, $R^{11}$, $R^{12}$, $R^{15}$, and $R^{16}$ are each independently a primary or secondary alkylene group having 1 to 10 carbon atoms or a group formed by removal of two hydroxy groups from a compound selected from the group consisting of a polycaprolactone diol, a polyether diol, and a polycarbonate diol, n3 represents an integer of 1 to 10, $R^{13}$, $R^{14}$, $R^{17}$, and $R^{18}$ are each independently a hydrogen atom or a methyl group, and $A^1$, $A^2$, and $A^3$ are each independently any of groups represented by the following formulae (*1) to (*4);

[Formula 5]

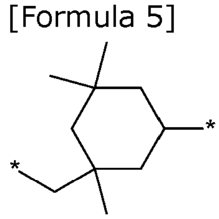

(*1)

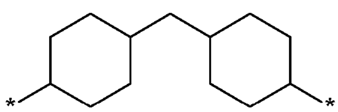

(*2)

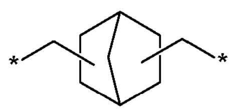

(*3)

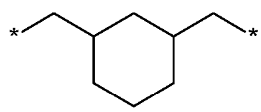

(*4)

wherein * is a bond, and is bound to a nitrogen atom in the formula (4) or (5);

[Formula 6]

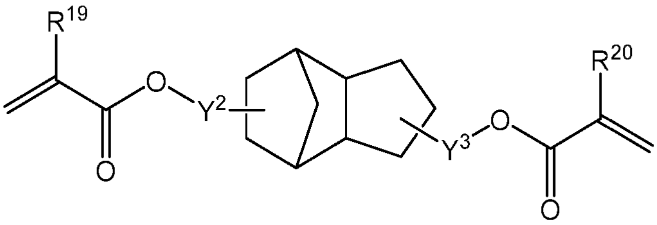

(6)

wherein $R^{19}$ and $R^{20}$ each independently represent a hydrogen atom or a methyl group, and $Y^2$ and $Y^3$ each independently represent an alkylene group having 1 to 5 carbon atoms; and

[Formula 7]

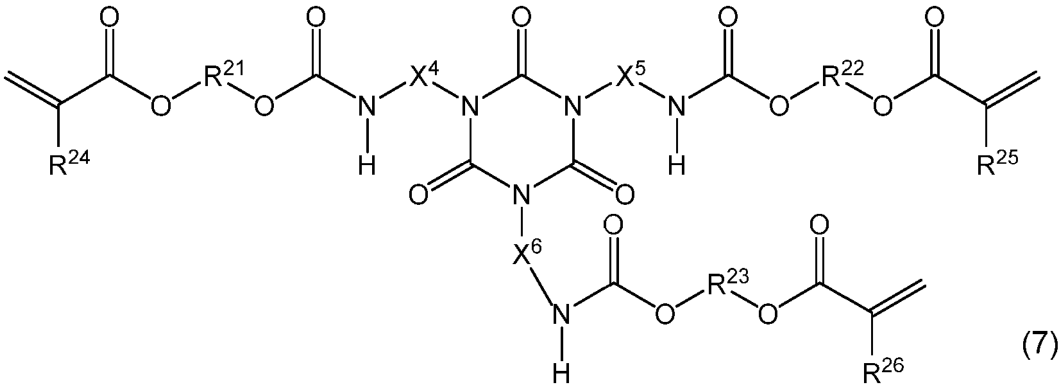

(7)

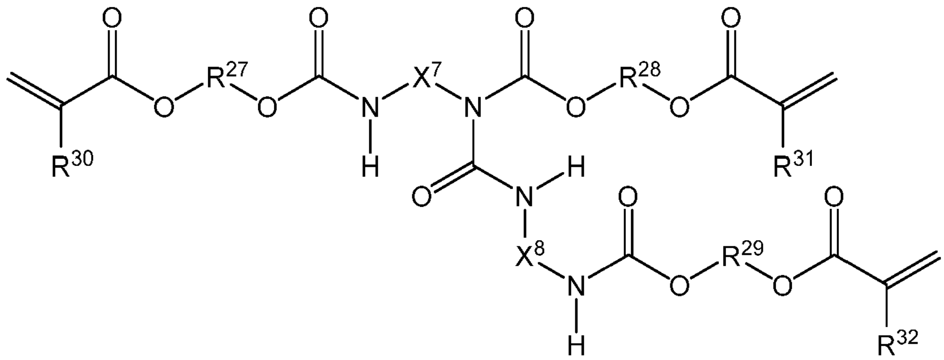

(8)

wherein $R^{21}$ to $R^{23}$ and $R^{27}$ to $R^{29}$ each independently represent a linear or branched alkylene group having 1 to 10 carbon atoms, $R^{24}$ to $R^{26}$ and $R^{30}$ to $R^{32}$ each independently represent a hydrogen atom or a methyl group, and $X^4$ to $X^6$, $X^7$, and $X^8$ each independently represent an alkylene group having 2 to 17 carbon atoms.

**2.** The active-energy-ray-curable coating composition according to claim 1, wherein the component (C) is a compound represented by the following general formula (9) or (10):

[Formula 8]

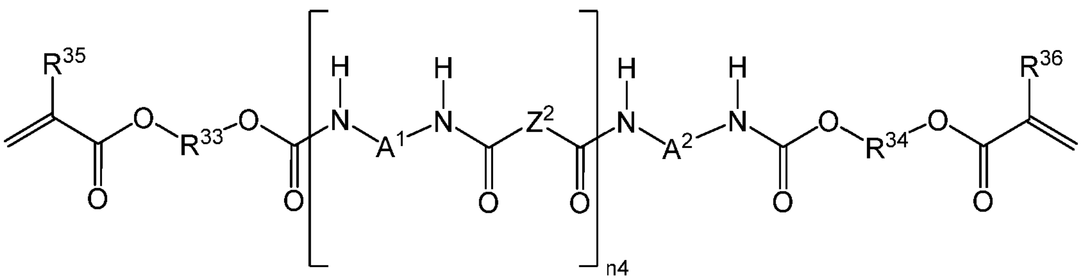

(9)

wherein $Z^2$ is a group formed by removal of two hydrogen atoms from a compound selected from the group consisting of a polytetramethylene glycol and a polycarbonate diol, $R^{33}$ and $R^{34}$ are a primary or secondary alkylene group having 1 to 10 carbon atoms, n4 is an integer of 1 to 10, $R^{35}$ and $R^{36}$ are a hydrogen atom or a methyl group, and $A^1$ and $A^2$ are same as described above; and

[Formula 9]

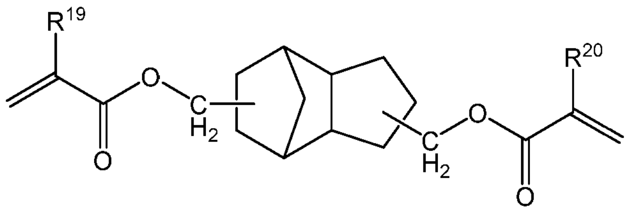

(10)

wherein $R^{19}$ and $R^{20}$ are same as described above.

**3.** The active-energy-ray-curable coating composition according to claim 1, wherein the component (A) is a compound represented by the general formula (2).

**4.** A molded article comprising:

a cured film of the active-energy-ray-curable coating composition according to any one of claims 1 to 3; and a substrate.

**5.** The molded article according to claim 4, wherein the substrate is a polycarbonate resin.

**Patentansprüche**

**1.** Durch aktive Strahlungsenergie härtbare Beschichtungszusammensetzung, die die Komponenten (A) bis (D) enthält:

als Komponente (A) eine Verbindung, die durch die folgende allgemeine Formel (1) oder (2) dargestellt wird;
als Komponente (B) eine Verbindung, die durch die folgende allgemeine Formel (3) dargestellt wird;
als Komponente (C) eine Verbindung, die durch die folgende allgemeine Formel (4), (5) oder (6) dargestellt wird; und
als Komponente (D) eine Verbindung, die durch die folgende allgemeine Formel (7) oder (8) dargestellt wird, wobei
in einem Gesamtfeststoffgehalt der Komponenten (A) bis (D) ein Gehalt der Komponente (A) 1 Massenprozent oder mehr und 40 Massenprozent oder weniger beträgt, ein Gehalt der Komponente (B) 30 Massenprozent oder mehr und 85 Massenprozent oder weniger beträgt, ein Gehalt der Komponente (C) 1 Massenprozent oder mehr und 30 Massenprozent oder weniger beträgt und ein Gehalt der Komponente (D) 1 Massenprozent oder mehr und 40 Massenprozent oder weniger beträgt:

[Formel 1]

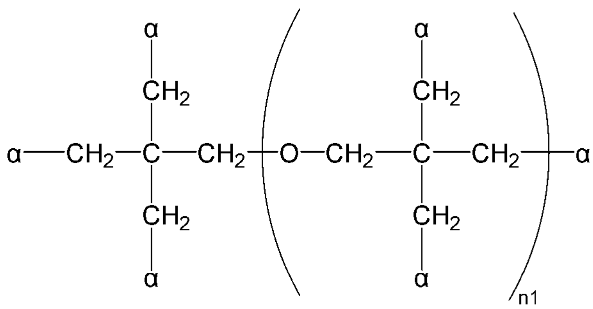

(1)

wobei mindestens drei $\alpha$ aus einer Vielzahl von $\alpha$ $CH^2$=$CR^1$-COO-darstellen, $R^1$ ein Wasserstoffatom oder eine Methylgruppe darstellt, die übrigen $\alpha$ eine Hydroxygruppe darstellen und n1 eine ganze Zahl von 0 bis 4 darstellt;

[Formel 2]

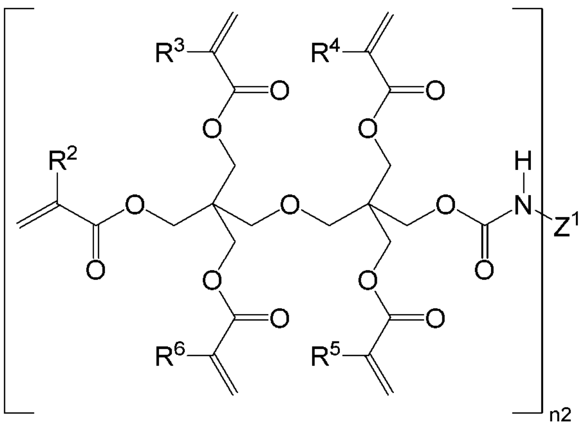

(2)

wobei $Z^1$ eine Struktur darstellt, die von einem aliphatischen Isocyanat oder einem alicyclischen Isocyanat abgeleitet ist, $R^2$ bis $R^6$ jeweils unabhängig voneinander ein Wasserstoffatom oder eine Methylgruppe darstellen und n2 eine ganze Zahl von 2 bis 3 darstellt; wenn die Verbindung eine Vielzahl von $R^2$ bis $R^6$ aufweist, sind $R^2$ bis $R^6$ optional gleich oder voneinander verschieden;

[Formel 3]

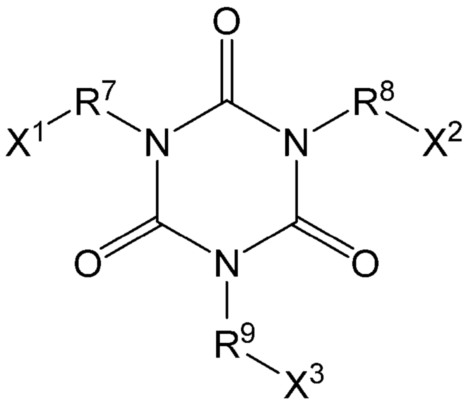

(3)

wobei $X^1$, $X^2$ und $X^3$ jeweils unabhängig voneinander $CH_2=CR^{10}$-CO-, $CH_2=CR^{10}$-CO(O$(CH_2)_5$-CO$)_{a1}$-, ein Wasserstoffatom oder eine Alkylgruppe darstellen, die $R^{10}$ ein Wasserstoffatom oder eine Methylgruppe darstellen und optional gleich oder voneinander verschieden sind, und a1 eine ganze Zahl von 1 oder mehr ist; mindestens zwei von $X^1$ bis $X^3$ sind $CH_2=CR^{10}$-CO- oder $CH_2=CR^{10}$-CO(O$(CH_2)_5$-CO$)_{a1}$-, und $R^7$, $R^8$ und $R^9$ stellen jeweils unabhängig voneinander eine Oxyalkylengruppe oder eine Polyoxyalkylengruppe dar;

[Formel 4]

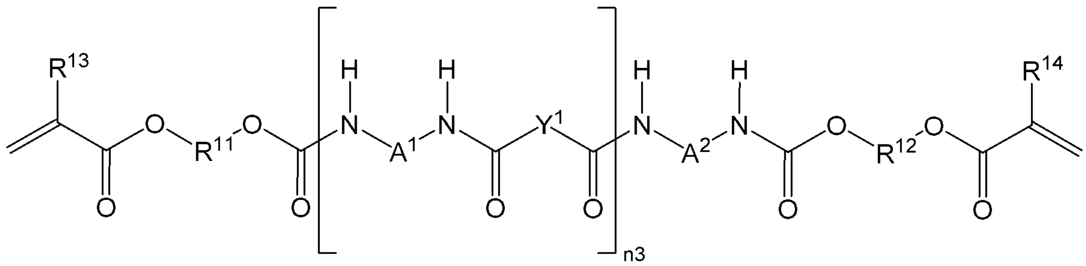

(4)

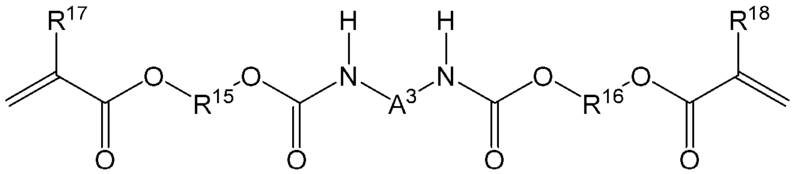

(5)

wobei $Y^1$ eine Gruppe ist, die durch Entfernen von zwei Wasserstoffatomen aus einer Verbindung gebildet wird, die aus der Gruppe ausgewählt ist, die aus einer Diolverbindung mit einer linearen oder verzweigten Alkylengruppe, einem Polycaprolactondiol, einem Polyetherdiol und einem Polycarbonatdiol besteht, $R^{11}$, $R^{12}$, $R^{15}$ und $R^{16}$ jeweils unabhängig voneinander eine primäre oder sekundäre Alkylengruppe mit 1 bis 10 Kohlenstoffatomen oder eine Gruppe sind, die durch Entfernen von zwei Hydroxygruppen aus einer Verbindung gebildet wird, die aus der Gruppe ausgewählt ist, die aus einem Polycaprolactondiol, einem Polyetherdiol und einem Polycarbonatdiol besteht, n3 eine ganze Zahl von 1 bis 10 darstellt, $R^{13}$, $R^{14}$, $R^{17}$ und $R^{18}$ jeweils unabhängig voneinander ein Wasserstoffatom oder eine Methylgruppe sind und $A^1$, $A^2$ und $A^3$ jeweils unabhängig voneinander eine der durch die folgenden Formeln (*1) bis (*4) dargestellten Gruppen sind;

[Formel 5]

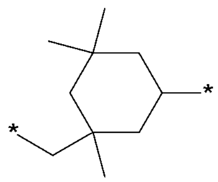

(*1)

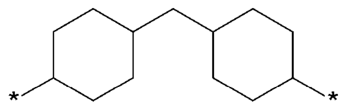

(*2)

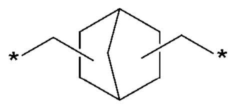

(*3)

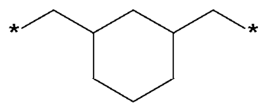

(*4)

wobei * eine Bindung ist und an ein Stickstoffatom in der Formel (4) oder (5) gebunden ist;

[Formel 6]

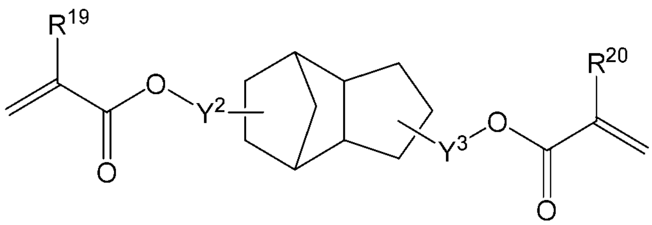

(6)

wobei $R^{19}$ und $R^{20}$ jeweils unabhängig voneinander ein Wasserstoffatom oder eine Methylgruppe darstellen und $Y^2$ und $Y^3$ jeweils unabhängig voneinander eine Alkylengruppe mit 1 bis 5 Kohlenstoffatomen darstellen; und

[Formel 7]

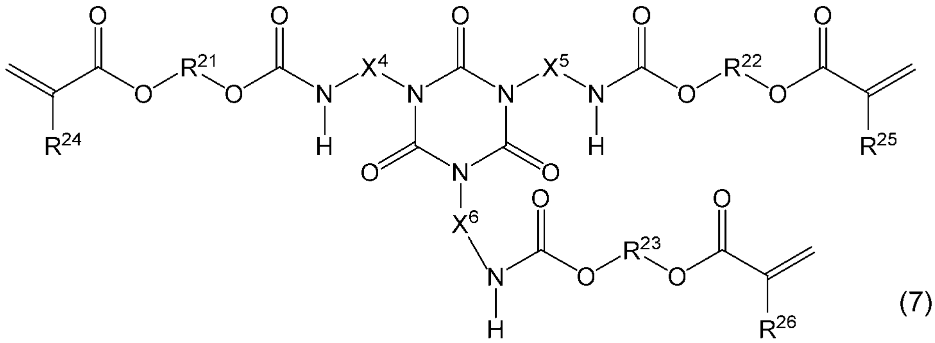

(7)

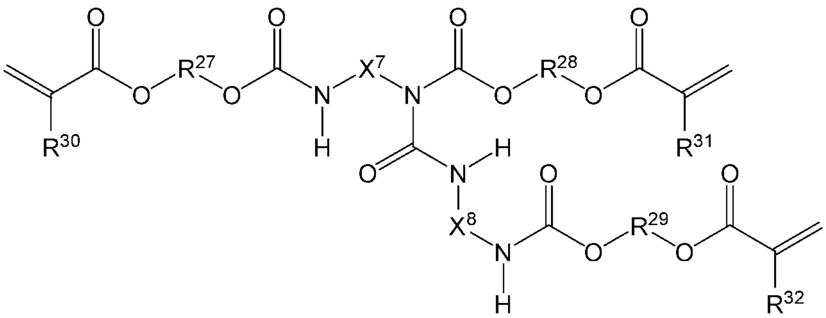

(8)

wobei $R^{21}$ bis $R^{23}$ und $R^{27}$ bis $R^{29}$ jeweils unabhängig voneinander eine lineare oder verzweigte Alkylengruppe mit 1 bis 10 Kohlenstoffatomen darstellen, $R^{24}$ bis $R^{26}$ und $R^{30}$ bis $R^{32}$ jeweils unabhängig voneinander ein Wasserstoffatom oder eine Methylgruppe darstellen und $X^4$ bis $X^6$, $X^7$ und $X^8$ jeweils unabhängig voneinander eine Alkylengruppe mit 2 bis 17 Kohlenstoffatomen darstellen.

**2.** Durch aktive Strahlungsenergie härtbare Beschichtungszusammensetzung nach Anspruch 1, wobei die Komponente (C) eine Verbindung ist, die durch die folgende allgemeine Formel (9) oder (10) dargestellt wird:

[Formel 8]

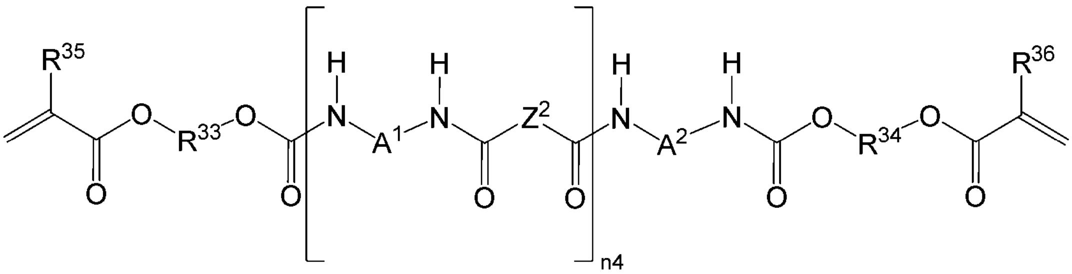

(9)

wobei $Z^2$ eine Gruppe ist, die durch Entfernen von zwei Wasserstoffatomen aus einer Verbindung gebildet wird, die aus der Gruppe ausgewählt ist, die aus einem Polytetramethylenglykol und einem Polycarbonatdiol besteht, $R^{33}$ und $R^{34}$ eine primäre oder sekundäre Alkylengruppe mit 1 bis 10 Kohlenstoffatomen sind, n4 eine ganze Zahl von 1 bis 10 ist, $R^{35}$ und $R^{36}$ ein Wasserstoffatom oder eine Methylgruppe sind und $A^1$ und $A^2$ wie oben beschrieben sind; und

[Formel 9]

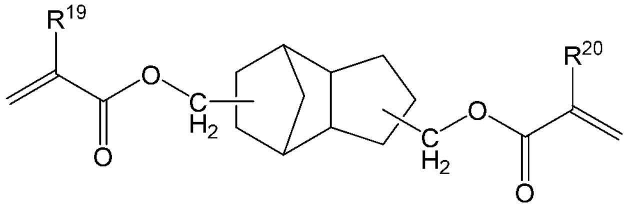

(10)

wobei $R^{19}$ und $R^{20}$ wie oben beschrieben sind.

3. Durch aktive Strahlungsenergie härtbare Beschichtungszusammensetzung nach Anspruch 1, wobei die Komponente (A) eine Verbindung ist, die durch die allgemeine Formel (2) dargestellt wird.

4. Formteil, umfassend:

einen gehärteten Film aus der durch aktive Strahlungsenergie härtbaren Beschichtungszusammensetzung gemäß einem der Ansprüche 1 bis 3; und
ein Substrat.

5. Formteil gemäß Anspruch 4, wobei das Substrat ein Polycarbonatharz ist.

## Revendications

1. Composition de revêtement durcissable par rayonnement à énergie active comprenant les composants (A) à (D) :

comme composant (A), un composé représenté par la formule générale (1) ou (2) suivante ;
comme composant (B), un composé représenté par la formule générale (3) suivante ;
comme composant (C), un composé représenté par la formule générale (4), (5) ou (6) suivante ; et
comme composant (D), un composé représenté par la formule générale (7) ou (8) suivante, dans laquelle dans une teneur totale en solides des composants (A) à (D), une teneur en composant (A) est de 1 % en masse ou plus et de 40 % en masse ou moins, une teneur en composant (B) est de 30 % en masse ou plus et de 85 % en masse ou moins, une teneur en composant (C) est de 1 % en masse ou plus et de 30 % en masse ou moins, et une teneur en composant (D) est de 1 % en masse ou plus et de 40 % en masse ou moins

[Formule 1]

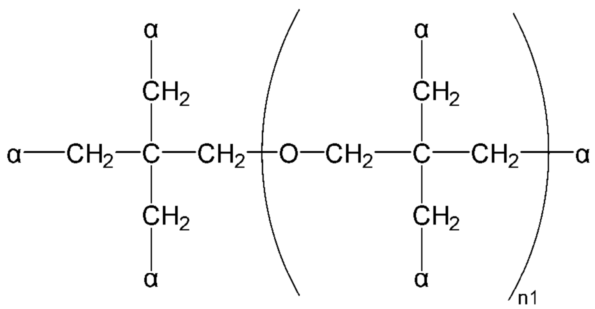

(1)

dans laquelle au moins trois $\alpha$ parmi une pluralité de $\alpha$ représentent $CH_2=CR^1-COO-$, $R^1$ représente un atome d'hydrogène ou un groupe méthyle, les autres $\alpha$ représentent un groupe hydroxy, et n1 représente un nombre entier de 0 à 4 ;

[Formule 2]

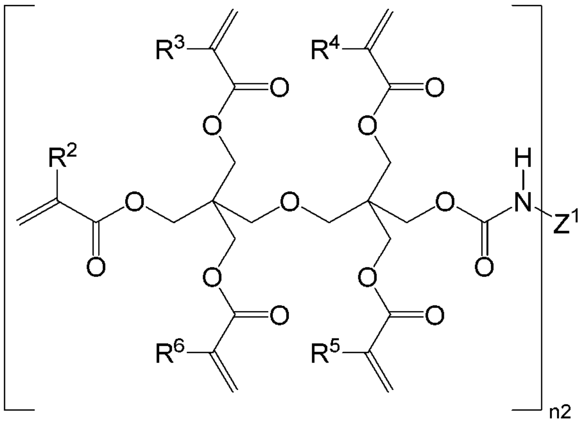

(2)

dans laquelle $Z^1$ représente une structure dérivée d'un isocyanate aliphatique ou d'un isocyanate alicyclique, $R^2$ à $R^6$ représentent chacun indépendamment un atome d'hydrogène ou un groupe méthyle, et n2 représente un nombre entier de 2 à 3 ; lorsque le composé comporte une pluralité de $R^2$ à $R^6$, les $R^2$ à $R^6$ sont éventuellement identiques ou différents les uns des autres ;

[Formule 3]

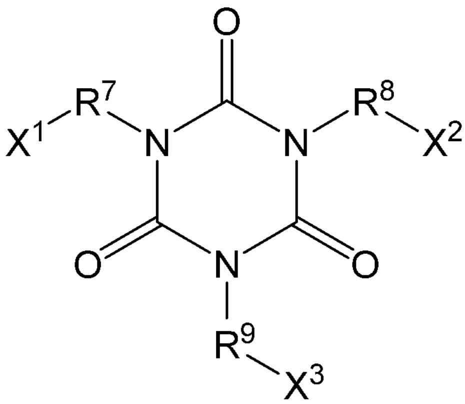

(3)

dans laquelle $X^1$, $X^2$ et $X^3$ représentent chacun indépendamment $CH_2=CR^{10}-CO-$, $CH_2=CR^{10}-CO(O(CH_2)_5-CO)_{a1}-$, un atome d'hydrogène ou un groupe alkyle, les $R^{10}$ représentent un atome d'hydrogène ou un groupe méthyle et sont éventuellement identiques ou différents les uns des autres, et a1 est un nombre entier égal ou supérieur à 1 ; au moins deux des groupes $X^1$ à $X^3$ sont $CH_2=CR^{10}-CO-$ ou $CH_2=CR^{10}-CO(O(CH_2)_5-CO)_{a1}-$, et $R^7$, $R^8$ et $R^9$ représentent chacun indépendamment un groupe oxyalkylène ou un groupe polyoxyalkylène ;

[Formule 4]

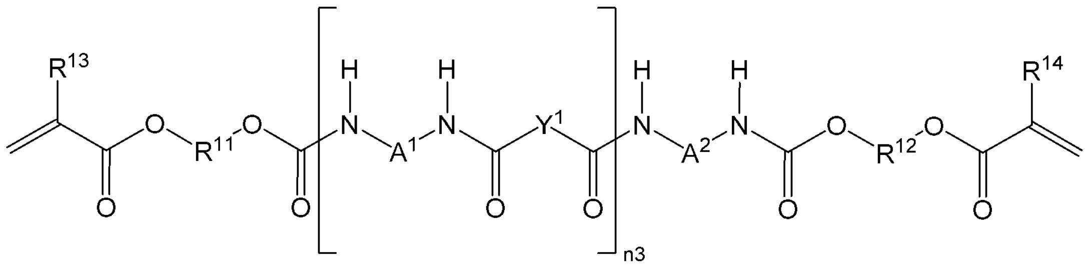

(4)

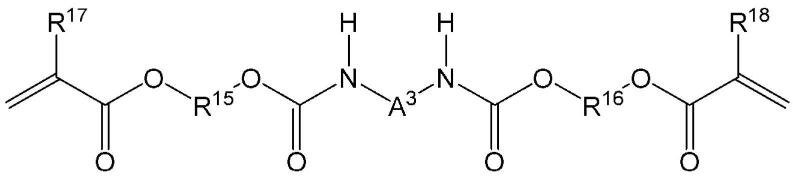

(5)

dans laquelle $Y^1$ est un groupe formé par élimination de deux atomes d'hydrogène d'un composé choisi dans le groupe constitué par un composé diol ayant un groupe alkylène linéaire ou ramifié, un polycaprolactone diol, un polyéther diol et un polycarbonate diol, $R^{11}$, $R^{12}$, $R^{15}$ et $R^{16}$ représentent chacun indépendamment un groupe alkylène primaire ou secondaire ayant 1 à 10 atomes de carbone ou un groupe formé par élimination de deux groupes hydroxy d'un composé choisi dans le groupe constitué par un polycaprolactone diol, un polyéther diol et un polycarbonate diol, n3 représente un nombre entier de 1 à 10, $R^{13}$, $R^{14}$, $R^{17}$ et $R^{18}$ représentent chacun indépendamment un atome d'hydrogène ou un groupe méthyle, et $A^1$, $A^2$ et $A^3$ représentent chacun indépendamment l'un quelconque des groupes représentés par les formules (*1) à (*4) suivantes :

[Formule 5]

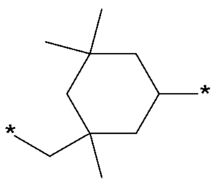

(*1)

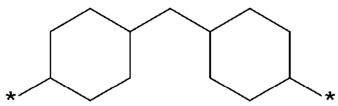

(*2)

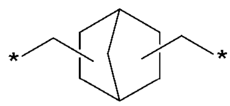

(*3)

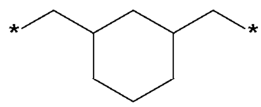

(*4)

dans laquelle * est une liaison et est lié à un atome d'azote dans la formule (4) ou (5) ;

[Formule 6]

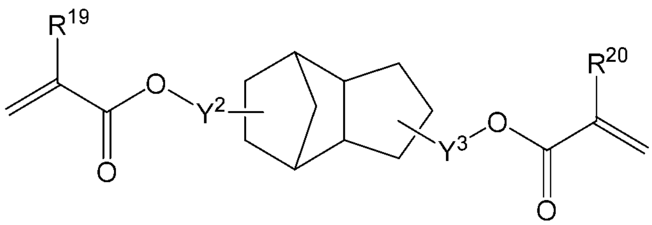

(6)

dans laquelle $R^{19}$ et $R^{20}$ représentent chacun indépendamment un atome d'hydrogène ou un groupe méthyle, et $Y^2$ et $Y^3$ représentent chacun indépendamment un groupe alkylène ayant 1 à 5 atomes de carbone ; et

[Formule 7]

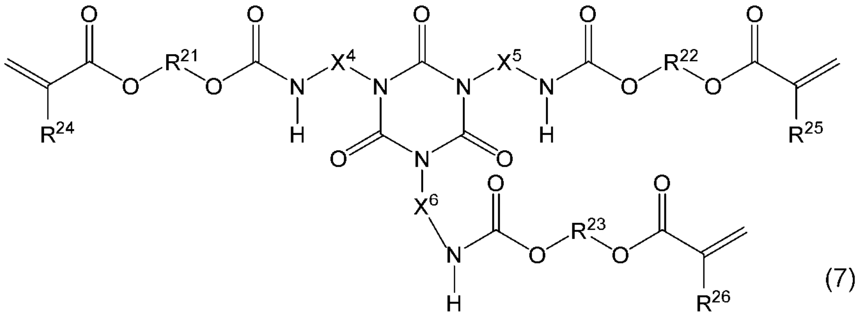

(7)

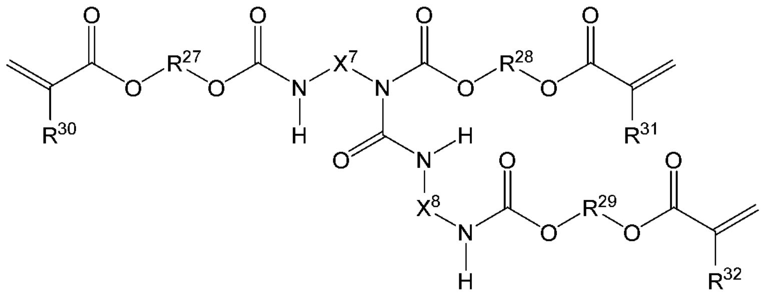

(8)

dans laquelle $R^{21}$ à $R^{23}$ et $R^{27}$ à $R^{29}$ représentent chacun indépendamment un groupe alkylène linéaire ou ramifié ayant 1 à 10 atomes de carbone, $R^{24}$ à $R^{26}$ et $R^{30}$ à $R^{32}$ représentent chacun indépendamment un atome d'hydrogène ou un groupe méthyle, et $X^4$ à $X^6$, $X^7$ et $X^8$ représentent chacun indépendamment un groupe alkylène ayant 2 à 17 atomes de carbone.

**2.** Composition de revêtement durcissable par rayonnement à énergie active selon la revendication 1, dans laquelle le composant (C) est un composé représenté par la formule générale (9) ou (10) suivante :

[Formule 8]

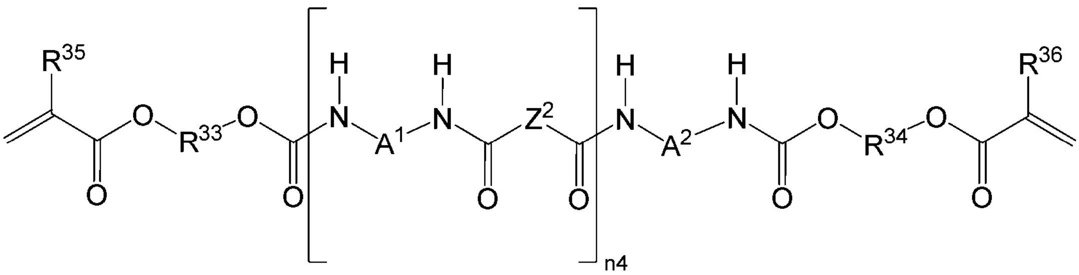

(9)

dans laquelle $Z^2$ est un groupe formé par l'élimination de deux atomes d'hydrogène d'un composé choisi dans le groupe constitué par un polytétraméthylène glycol et un polycarbonate diol, $R^{33}$ et $R^{34}$ sont un groupe alkylène primaire ou secondaire ayant de 1 à 10 atomes de carbone, n4 est un nombre entier de 1 à 10, $R^{35}$ et $R^{36}$ sont un atome d'hydrogène ou un groupe méthyle, et $A^1$ et $A^2$ sont identiques à ceux décrits ci-dessus ; et

[Formule 9]

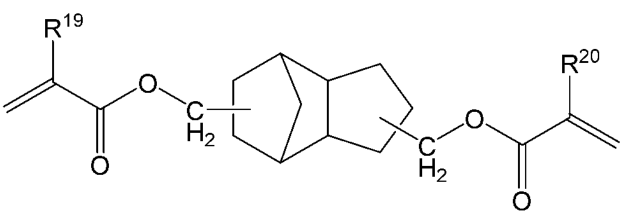

(10)

dans laquelle $R^{19}$ et $R^{20}$ sont identiques à ceux décrits ci-dessus.

3. Composition de revêtement durcissable par rayonnement à énergie active selon la revendication 1, dans laquelle le composant (A) est un composé représenté par la formule générale (2).

4. Article moulé comprenant :

   un film durci de la composition de revêtement durcissable par rayonnement à énergie active selon l'une quelconque des revendications 1 à 3 ; et
   un substrat.

5. Article moulé selon la revendication 4, dans lequel le substrat est une résine polycarbonate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP 2010254840 A
- JP 2012229331 A
- JP 2007314769 A